(19)

**Europäisches Patentamt**
**European Patent Office**
**Office européen des brevets**

(11)   **EP 4 787 232 A1**

(12)   **EUROPEAN PATENT APPLICATION**

(43) Date of publication:
   **05.08.2026   Bulletin 2026/32**

(21) Application number: **26155562.7**

(22) Date of filing: **30.01.2026**

(51) International Patent Classification (IPC):
   **G06N 3/045** (2023.01)      **G06N 3/047** (2023.01)
   **G06N 7/01** (2023.01)

(52) Cooperative Patent Classification (CPC):
   **G06N 3/047; G06N 3/045; G06N 7/01**

(84) Designated Contracting States:
   **AL AT BE BG CH CY CZ DE DK EE ES FI FR GB
   GR HR HU IE IS IT LI LT LU LV MC ME MK MT NL
   NO PL PT RO RS SE SI SK SM TR**
   Designated Extension States:
   **BA**
   Designated Validation States:
   **GE KH LA MA MD TN**

(30) Priority:   **30.01.2025   GR 20250100064
             24.09.2025   GR 20250100762**

(71) Applicant: **GDM Holding LLC
   Mountain View, CA 94043 (US)**

(72) Inventors:
   • **Titsias, Michail
     London, N1C 4AG (GB)**
   • **Wang, Zhe
     London, N1C 4AG (GB)**
   • **Shi, Jiaxin
     London, N1C 4AG (GB)**
   • **Zhang, Yangtian
     Mountain View, 94043 (US)**

(74) Representative: **Marks & Clerk GST
   1 New York Street
   Manchester M1 4HD (GB)**

(54)   **GENERATIVE MACHINE LEARNING MODELS WITH LEARNED GENERATION ORDER**

(57)   Methods, systems, and apparatus, including computer programs encoded on a computer storage medium, for generating sequences of network outputs using a generative machine learning model following a learned generation order. In one aspect, a method comprises receiving a network input and generating a sequence of network outputs using a generative model, the generating comprising, at each of a plurality of iterations: identifying a set of candidate positions for the iteration; determining uncertainty scores for each of the set of candidate positions using an uncertainty scoring neural network; selecting a position of the sequence of network outputs from the set of candidate positions using the uncertainty scores; and generating the network output at the selected position of the sequence of network outputs using the generative model.

**SEQUENCE GENERATION SYSTEM
100**

FIG. 1

**EP 4 787 232 A1**

**Description**

BACKGROUND

This specification relates to processing data using machine learning models.

Machine learning models receive an input and generate an output, e.g., a predicted output, based on the received input. Some machine learning models are parametric models and generate the output based on the received input and on values of the parameters of the model.

Some machine learning models are deep models that employ multiple layers of models to generate an output for a received input. For example, a deep neural network is a deep machine learning model that includes an output layer and one or more hidden layers that each apply a nonlinear transformation to a received input to generate an output.

SUMMARY

This specification generally describes a generative machine learning model that can be configured to generate sequences of network outputs. The described generative model can generate a sequence of network outputs following an ordering of the network outputs that is determined using uncertainty scores for the network outputs generated by an uncertainty scoring neural network for the generative model.

According to one aspect, there is provided a method performed by one or more computers, that includes receiving a network input and generating a sequence of network outputs using a generative model, wherein the sequence of network outputs comprises a respective network output at each of a plurality of positions of the sequence of network outputs and wherein the generating comprises, at each of a plurality of iterations: identifying a set of candidate positions for the iteration that comprises each position of the sequence of network outputs that does not have a generated network output as of the iteration; determining a respective uncertainty score for each of the set of candidate positions for the iteration by processing, using an uncertainty scoring neural network, the network input and the network outputs at any positions of the sequence of network outputs that have a generated network output as of the iteration; selecting a position of the sequence of network outputs from the set of candidate positions for the iteration using the uncertainty scores for each of the set of candidate positions for the iteration; and generating the network output at the selected position of the sequence of network outputs by processing, using the generative model, the network input and the network outputs at any position of the sequence of network outputs that does have a generated network output as of the iteration.

In some implementations, generating the sequence of network outputs using the generative model comprises, at one or more of the plurality of iterations: selecting a plurality of positions of the sequence of network outputs from the set of candidate positions for the iteration using the uncertainty scores for each of the set of candidate positions for the iteration; and generating respective network outputs at the selected positions of the sequence of network outputs by processing, using the generative model, the network input and the network outputs at any position of the sequence of network outputs that does have a generated network output as of the iteration.

In some implementations, the uncertainty scoring neural network and the generative model have been jointly trained to generate example sequences of network outputs using the generative model following orderings of network outputs determined using the uncertainty scoring network.

In some implementations, jointly training the uncertainty scoring neural network and the generative model to generate the example sequences of network outputs comprises: jointly training the uncertainty scoring neural network and the generative model to generate the example sequences of network outputs using variational inference and using the orderings of the network outputs determined using the uncertainty scoring neural network as latent variables of the variational inference.

In some implementations, jointly training the uncertainty scoring neural network and the generative model to generate the example sequences of network outputs using variational inference comprises: jointly training the uncertainty scoring neural network and the generative model with a posterior neural network using variational inference, wherein the posterior neural network is configured to process a sequence of network outputs to generate a prediction of an order in which the generative model generated the network outputs in the sequence.

In some implementations, the generative model can include one or more neural network layers of the posterior neural network. For example, the generative model can include one or more input layers of the posterior neural network.

In some implementations, jointly training the uncertainty scoring neural network and the generative model to generate the example sequences of network outputs using variational inference comprises: jointly training the uncertainty scoring neural network and the generative model to optimize an objective function that includes an evidence lower bound for the example sequences, wherein the evidence lower bound for the example sequences characterizes, for each example sequence of network outputs, a likelihood of the generative model generating the example sequence following an ordering of the network outputs determined using the uncertainty scoring network.

In some implementations, for each example sequence, the evidence lower bound for the example sequences characterizes, for each of one or more example orderings of the network outputs for the example sequence, a ratio between (i) a likelihood of the generative model generating the network outputs for the example sequence following the example ordering for the example sequence and (ii) a posterior likelihood of the example ordering for the example sequence given the network outputs for the example sequence.

In some implementations, the posterior likelihood of the example ordering for the example sequence given the network outputs for the example sequence characterizes a likelihood of the posterior neural network generating the example ordering for the example sequence by processing the example sequence.

In some implementations, jointly training the uncertainty scoring neural network and the generative model to generate the example sequences of network outputs using variational inference further comprises, for each example sequence: generating the one or more example orderings of the network outputs for the example sequence by processing the example sequence using the posterior neural network.

In some implementations, jointly training the uncertainty scoring neural network and the generative model to optimize the objective function for the example sequences comprises: jointly training the uncertainty scoring neural network and the generative model to optimize an estimate, in particular an unbiased estimate of the objective function for the example sequences. (A so-called unbiased estimate can be an estimate that, when averaged, is equal to the true value).

In some implementations, the (unbiased) estimate of the objective function comprises an unbiased estimate of the evidence lower bound for the example sequences and, for each example sequence, the unbiased estimate of the objective function for the example sequences characterizes, for a particular iteration for the example sequence and for each of one or more example orderings of the network outputs for the example sequence, a ratio between (i) a likelihood of the generative model generating, at the particular iteration and following an ordering of the network outputs determined using the uncertainty scoring network, a network output of the example sequence at a position in the example sequence for the particular iteration determined by the example ordering for the example sequence and (ii) a posterior likelihood of selecting, at the particular iteration, the position in the example sequence for the particular iteration determined by the example ordering for the example sequence given the network outputs.

In some implementations, the posterior likelihood of selecting, at the particular iteration, the position in the example sequence for the particular iteration determined by the example ordering for the example sequence given the network outputs for the example sequence characterizes a likelihood of the posterior neural network generating, at the particular iteration, the position in the example sequence determined by the example ordering for the particular iteration by processing the example sequence.

In some implementations, jointly training the uncertainty scoring neural network and the generative model to optimize the objective function for the example sequences comprises: determining gradients of the objective function for the example sequences with respect to parameters of the uncertainty scoring neural network and parameters of the generative model; and updating the (parameters, e.g. weights, of the) uncertainty scoring neural network and the generative model using the determined gradients of the objective function for the example sequences.

In some implementations, determining the gradients of the objective function for the example sequences with respect to the parameters of the uncertainty scoring neural network and the parameters of the generative model comprises: determining gradients of the (unbiased) estimate of the objective function for the example sequences with respect to the parameters of the uncertainty scoring neural network and the parameters of the generative model.

In some implementations, determining the gradients of the (unbiased) estimate of the objective function for the example sequences with respect to the parameters of the uncertainty scoring neural network and the parameters of the generative model comprises: determining the gradients of the unbiased estimate of the objective function for the example sequences with respect to the parameters of the uncertainty scoring neural network and the parameters of the generative model using a reinforcement learning technique.

In some implementations, the objective function comprises a weighted combination of the evidence lower bound for the example sequences and a first regularization term that measures a difference between (i) the likelihoods of the generative model generating the network outputs for the example sequences following the example orderings for the example sequences and (ii) the posterior likelihoods of the example orderings for the example sequences given the network outputs for the example sequences.

For example, the first regularization term can measure a Kullback-Leibler divergence between (i) the likelihoods of the generative model generating the network outputs for the example sequences following the example orderings for the example sequences (generated by the uncertainty scoring neural network) and (ii) the posterior likelihoods of the example orderings for the example sequences given the network outputs for the example sequences (generated by the posterior neural network).

In some implementations, jointly training the uncertainty scoring neural network and the generative model to optimize the objective function comprises: jointly training the uncertainty scoring neural network and the generative model to optimize the objective function using a weighting schedule for the first regularization term that reduces a weight of the first regularization term over a sequence of one or more training steps.

In some implementations, the objective function comprises a weighted combination of the evidence lower bound for the example sequences and a second regularization term that measures an entropy of the posterior likelihoods of the example orderings for the example sequences given the network outputs for the example sequences.

In some implementations, jointly training the uncertainty scoring neural network and the generative model to optimize the objective function comprises: jointly training the uncertainty scoring neural network and the generative model to optimize the objective function using a weighting schedule for the second regularization term that reduces a weight of the second regularization term over a sequence of one or more training steps.

In some implementations, selecting the position of the sequence of network outputs from the set of candidate positions for the iteration using the uncertainty scores for each of the set of candidate positions for the iteration comprises: determining a probability distribution for sampling over the set of candidate positions for the iteration defined by the uncertainty scores for each of the set of candidate positions for the iteration; and selecting a position of the sequence of network outputs from the set of candidate positions for the iteration in accordance with the probability distribution for sampling over the set of candidate positions for the iteration.

In some implementations, the uncertainty scoring neural network comprises one or more processing layers from the generative model and one or more processing layers that are not included within the generative model and determining the respective uncertainty score for each of the set of candidate positions for the iteration by processing, using the uncertainty scoring neural network, the network input and the network outputs at any positions of the sequence of network outputs that have a generated network output as of the iteration comprises: processing the network input and the network outputs at any positions of the sequence of network outputs that have a generated network output as of the iteration using the one or more processing layers from the generative model to generate data characterizing a respective distribution of network outputs for each of the set of candidate positions for the iteration; and processing the data characterizing the distributions of network outputs for each of the set of candidate positions for the iteration using the one or more processing layers that are not included within the generative model to determine the respective uncertainty score for each of the set of candidate positions for the iteration.

In some implementations, the uncertainty scoring neural network comprises one or more processing layers from the generative model and determining the respective uncertainty score for each of the set of candidate positions for the iteration by processing, using the uncertainty scoring neural network, the network input and the network outputs at any positions of the sequence of network outputs that have a generated network output as of the iteration comprises: processing the network input and the network outputs at any positions of the sequence of network outputs that have a generated network output as of the iteration using the one or more processing layers from the generative model to generate data characterizing a respective distribution of network outputs for each of the set of candidate positions for the iteration; and determining, for each of the set of candidate positions for the iteration, the uncertainty score for the candidate position as an entropy of the distribution of network outputs for the candidate position.

In some implementations, processing the network input and the network outputs at any positions of the sequence of network outputs that have a generated network output as of the iteration using the one or more processing layers from the generative model to generate data characterizing the respective distribution of network outputs for each of the set of candidate positions for the iteration comprises, for each of the set of candidate positions for the iteration: processing the network input, the network outputs at any positions of the sequence of network outputs that have a generated network output as of the iteration, and data specifying the candidate position using the one or more processing layers from the generative model to generate data characterizing the respective distribution of network outputs for the candidate position.

In some implementations, the network input can include masked elements representing each of the sequence of network outputs and the system can generate the sequence of network outputs by unmasking elements of the network input. In particular, at each iteration, the network input can include a respective masked element representing the network output at each position of the sequence of network outputs that does not have a generated network output as of the iteration and a respective unmasked element representing the network output at any position of the sequence of network outputs that has a generated network output as of the iteration. At each iteration, as part of generating the network output at the selected position of the sequence of network outputs, the system can update the network input by replacing the masked element representing the network output at the selected position with an unmasked element representing the generated network output at the selected position.

In some implementations, the generative model can be an insertion generative model and the system can generate the sequence of network outputs by iteratively inserting elements within the output sequence. For example, at each iteration, the system can generate a network output to include within the sequence of network outputs using the generative model and insert the generated network output within the sequence of network outputs as of the iteration, e.g., as a first element, as a last element, or between two previously generated outputs.

Each masked element can include initial features for the network output represented by the masked element. Similarly, each unmasked element can include generated features for the network output represented by the unmasked element. The masked elements can be differentiated from the unmasked elements by any of a variety of methods. As one example, the masked elements can include predefined default features (e.g., zero-valued features). As another example, the masked and unmasked elements can include data (e.g., a numerical value) that identifies each element as being either masked or unmasked.

The sequence of network outputs can characterize any of a variety of outputs, such as text data, image data audio data, video data, time series data, and so on. The sequence of network outputs can include an output token sequence (e.g., an output token sequence that includes output tokens characterizing, e.g., text data, image data audio data, video data, time series data, etc.).

Similarly, the network input can characterize any of a variety of inputs, such as input text data, input image data, input audio data, input video data, input time series data. The sequence of network outputs can include an input token sequence (e.g., an input token sequence that includes input tokens characterizing, e.g., text data, image data audio data, video data, time series data, etc.).

Particular embodiments of the subject matter described in this specification can be implemented so as to realize one or more of the following advantages.

By generating sequences of network outputs following orderings for the network outputs determined using the uncertainty scoring neural network, the generative model can generate the sequences of network outputs in an adaptable order that can depend both on the network inputs and on previously generated network outputs. For example, the generative model can generate sequences of network outputs following orderings determined by the uncertainty scoring neural network that prioritize generating more certain network outputs before more uncertain network outputs. Thus, at each iteration when the generative model generates a network output within a sequence of network outputs for a network input, the generated network output for the iteration can be a most certain network output as of the iteration (e.g., a network output that is most determined by the network input and by previously generated network outputs as of the iteration). This can enable the described systems to generate sequences of network outputs more accurately compared to conventional methods for generating sequences of network outputs that use, e.g., pre-defined orderings for the network outputs, random orderings for the network outputs, and so on. As a particular example, by generating sequences of network outputs following orderings that prioritize a certainty of the network outputs, rather than following pre-defined or random orderings, the described systems can more accurately perform infilling and data completion tasks, such as text replacement, image reconstruction, and so on.

As another example, whilst some data types have a natural order, e.g. left to right for text, other data types, such as images or graphs, typically lack a canonical ordering, which can make the application of a sequence processing neural network, such as an auto-regressive model, less effective. Implementations of the described techniques address this issue. For example when modelling a molecular structure as a graph with atoms as nodes and bonds as edges (e.g. represented as an adjacency matrix), implementations of the system can first generate network outputs that build a skeleton, then configure bonds, and then in-fill atoms, in particular by iteratively replacing masked elements of the network input.

By enabling generative models to more accurately generate network outputs for machine learning tasks, the described methods can utilize smaller (e.g., less complex) generative models to generate the output sequences with a given accuracy as compared to conventional methods. The described methods can therefore reduce computational costs (e.g., power consumption, memory consumption, processing time, etc.). For example, by utilizing a smaller, more computationally efficient generative model to attain a same level of accuracy as conventional methods, the described methods can, e.g., reduce a number of training iterations required to train the generative model, reduce computational costs of generating outputs using the generative model, and so on.

The details of one or more embodiments of the subject matter of this specification are set forth in the accompanying drawings and the description below. Other features, aspects, and advantages of the subject matter will become apparent from the description, the drawings, and the claims.

BRIEF DESCRIPTION OF THE DRAWINGS

FIG. 1 is a block diagram of an example sequence generation system.
FIG. 2 illustrates generating an output sequence by unmasking elements of the output sequence following an ordering determined using an uncertainty scoring neural network.
FIG. 3 illustrates generating an output sequence by generating and inserting elements of the output sequence following an ordering determined using an uncertainty scoring neural network.
FIG. 4 is a flow diagram of an example process for generating a sequence of network outputs following an ordering determined using an uncertainty scoring neural network.
FIG. 5 is a flow diagram of an example process for sampling positions for generating an output sequence using uncertainty scores determined using an uncertainty scoring neural network.
FIG. 6 is a flow diagram of an example process for jointly training a generative model and an uncertainty scoring neural network to generating output sequences for a machine learning task following orderings determined using an uncertainty scoring neural network.

FIG. 7 illustrates experimental results obtained by using an implementation of the sequence generation system described in this specification to perform molecule generation tasks.

Like reference numbers and designations in the various drawings indicate like elements.

DETAILED DESCRIPTION

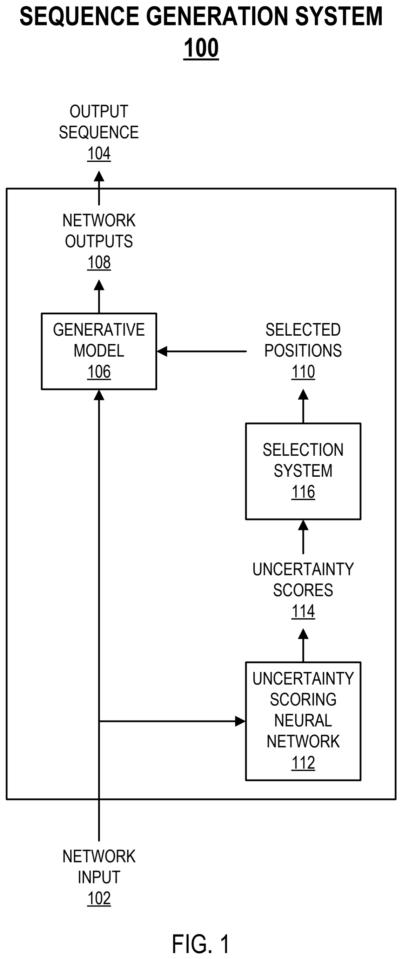

FIG. 1 shows an example sequence generation system 100. The sequence generation system 100 is an example of a system implemented as computer programs on one or more computers in one or more locations in which the systems, components, and techniques described below are implemented.

The sequence generation system 100 can process a network input 102 for a machine learning task to generate an output sequence 104 of network outputs for the machine learning task using a generative model 106. In general, the output sequence 104 can include a plurality of network outputs and the system 100 can generate the output sequence 104 over a plurality of iterations. At each iteration of generating the output sequence 104, the system 100 can process a model input for the iteration that includes the network input 102 using the generative model 106 to generate one or more network outputs 108 for the iteration to include within the output sequence 104.

After generating and including network outputs within the output sequence 104, the sequence generation system 100 can use the generated network outputs to generate subsequent network outputs to include within the output sequence 104. In particular, the model input for the generative model 106 at each iteration can include (i) the network input 102 and (ii) some or all of the network outputs 108 generated during previous iterations.

For example, in some implementations, the generative model 106 can be configured to process a model input that includes the network input 102 and a sequence of masked elements representing the output sequence 104. At each iteration, the sequence generation system 100 can update the model input to the generative model 106 by unmasking masked elements of the model input using the network outputs 108 generated by the generative model 106 during the iteration. In particular, when the system 100 generates a network output to include within the output sequence 104, the system 100 can update the model input to the generative model 106 by replacing a corresponding masked element within the model input with the generated network output. Following such an unmasking process, the system 100 can continue replacing masked elements with the network outputs 108 generated by the generative model 106 until each masked element of the model input has been unmasked. After unmasking each masked element of the model input to the generative model 106 (e.g., after a final iteration), the system 100 can return the sequence of unmasked elements as the output sequence 104.

As another example, in some implementations, the generative model 106 can be an insertion generative model and the model input to the generative model 106 can include the network input 102 and a sequence of elements representing any previously generated elements of the output sequence 104. When the generative model 106 is an insertion generative model, the sequence generation system 100 can iteratively update the model input to the generative model 106 at each iteration by inserting the network outputs generated by the generative model 106 within the sequence of elements representing the output sequence 104. In particular, when the system 100 generates a network output to include within the output sequence 104, the system 100 can update the model input to the generative model 106 by inserting a corresponding element that includes the generated network output within the model input as a first element, as a last element, or between two previously generated elements for the output sequence 104.

When the generative model 106 is an insertion generative model, the sequence generation system 100 can, at each iteration of generating the output sequence 104, determine whether to terminate generating and inserting elements of the output sequence 104. For example, at each iteration, the system 100 can determine whether to continue generating and inserting elements for the output sequence 104 during the iteration or to complete the generation of the output sequence 104 by returning the previously generated elements of the output sequence 104 as of the iteration. The sequence generation system 100 can therefore be configured to dynamically determine the length of the output sequence 104.

Some examples of insertion generative models are described in more detail by Stern et al. in "Insertion Transformer: Flexible Sequence Generation via Insertion Operations", International Conference on Machine Learning, PMLR, 2019 and by Gu et al. in "Insertion-Based Decoding with Automatically Inferred Generation Order", Transactions of the Association for Computational Linguistics, 7 (2019): 661-676.

The sequence generation system 100 can generate the output sequence 104 following an adaptable order that can depend both on the network input 102 and on the generated network outputs 108 included within the output sequence 104. The system 100 can determine the order for generating the output sequence 104 by selecting which positions of the output sequence 104 the system 100 generates (e.g., by unmasking elements, inserting elements, etc.) during each iteration based on the network input 102 and any previously generated network outputs 108. After determining the selected positions 110 for an iteration, the system 100 can generate and include corresponding network outputs 108 within the selected positions 110 of the output sequence 104.

The network input 102 can include input data of any appropriate input data modality for the machine learning task. The network input 102 can include, e.g., text data, image data, audio data, video data, time series data, structured numerical data, molecule data characterizing a spatial and/or chemical structure of a molecule, or any combination thereof. In some implementations, the network input 102 can be an input token sequence representing input data for the machine learning task.

Similarly, the network outputs 108 can include output data of any appropriate output data modality for the machine learning task. The network output 102 can include, e.g., text data, image data, i.e. data representing image pixels, e.g. values of individual pixels or blocks or pixels of an image, audio data i.e. data representing an audio waveform, video data i.e. data representing video image pixels, e.g. values of individual pixels or blocks or pixels of a video, time series data, structured numerical data, molecule data characterizing a spatial and/or chemical structure of a molecule, or any combination thereof. In some implementations, the network outputs 108 can be tokens of an output token sequence representing output data for the machine learning task. Broadly, the network output defines a data item, such as an image, audio, or molecular structure, that is generated by gradually unmasking a network input that represents the data item, starting from a partially or fully masked network input. This process can be conditioned on any sort of conditioning data, e.g. a text prompt or other instruction or prompt. This can be provided as part of the network input, e.g. as conditioning or other tokens, or can be provided as side information to the generative model. This can specify one or more desired characteristics of the network output, i.e. of the generated data item. For example in the case of a molecule a text prompt or other instruction can specify desired property or chemical formula.

In implementations that generate a molecular structure a molecule can be represented in various ways. For example in some implementations, the molecules can be represented as molecular graphs, where a graph comprises a node feature vector representing atom types, and a dense adjacency matrix representing bond types, e.g. single, double, triple, or aromatic bonds. In this context a dense adjacency matrix is one that represents edges between each pair of nodes, e.g. an N X N matrix for N nodes. In some implementations, but not necessarily, the graphs for smaller molecules can be padded to a maximum size; in some implementations the generative model can ingest a variable length input. The adjacency matrix can include 'no-edge' or 'imaginary bond' states to represent the absence of a bond (as distinguished from a masked state). In some implementations, the molecules can be represented as linear text sequences, e.g. character strings such as SMILES strings, that encode the topological structure of the molecule into a character sequence. Optionally The data representing a molecule can be pre-processed to include particular tokens, e.g. representing ring closures, or branches or side chains (in parentheses in SMILES).

Example network inputs and network outputs for various example machine learning tasks are described in more detail later in this specification.

In general, the generative model 106 can have any appropriate architecture to process network inputs and generate network outputs for the machine learning task. In particular, the generative model 106 can include any of a variety of processing layers (e.g., feedforward layers, convolutional layers, recurrent layers, attention layers, graph processing layers, etc.) in any appropriate combination for processing network inputs and generating corresponding network outputs for the machine learning task.

As one example, the generative model 106 can include an auto-regressive generative model (e.g., a Transformer, a recurrent neural network, etc.) that can auto-regressively generate sequences of network outputs by processing corresponding prompts. The generative model 106 can, for example, include a large language model (LLM) that can generate tokenized representations of text data, a vision-language model (VLM) that can generate tokenized representations of image or video data, an audio language model that can generate tokenized representations of text data, a multi-modal language model that can process and generate tokenized representations of data for a plurality of different data modalities, and so forth.

When the generative model 106 includes an auto-regressive generative model, the generative model 106 can be configured to auto-regressively generate network outputs of an output sequence following a specified ordering for the output sequence by, at each generation of generating the output sequence, processing the previously generated network outputs of the output sequence to generate a next network output to include within the output sequence following the specified ordering for the output sequence.

As another example, the generative model 106 can include a diffusion model (e.g., a denoising diffusion model, a score-based diffusion model, a latent diffusion model, etc.) that can generate sequences of network outputs by repeatedly transforming samples from a noise distribution (e.g., a Gaussian distribution) based on the corresponding prompts over a sequence of iterations. For example, the generative model 106 can include a diffusion model that transforms samples from the noise distribution using a denoising neural network with any appropriate architecture (e.g., a convolutional neural network, a recurrent neural network, etc.). Such a diffusion model can be used to generate, e.g., a still or moving (video) image.

As another example, the generative model 106 can include a neural network that can generate sequences of network outputs by transforming samples from a noise distribution (e.g., a Gaussian distribution). The generative model 106 can include, e.g., a generator network of a generative adversarial network, a decoder of a variational auto-encoder, a normalizing flow, and so on.

The sequence generation system 100 can use an uncertainty scoring neural network 112 to determine the selected positions 110 of the output sequence 104 for each iteration of generating the output sequence 104. The uncertainty scoring neural network 112 can be configured to process data characterizing (i) the model input 102 and (ii) some or all of the previously generated network outputs 108 at each iteration to generate uncertainty scores 114 for each position of the output sequence 104 that has not yet been generated (e.g., unmasked, inserted, etc.) as of the iteration.

In general, the uncertainty scoring neural network 112 can have any appropriate architecture for processing the data characterizing (i) the model input 102 and (ii) some or all of the previously generated network outputs 108 at each iteration to generate the uncertainty scores 114. In particular, the uncertainty scoring neural network 112 can include any of a variety of processing layers (e.g., feedforward layers, convolutional layers, recurrent layers, attention layers, graph processing layers, etc.) in any appropriate combination for processing the data characterizing (i) the model input 102 and (ii) some or all of the previously generated network outputs 108 at each iteration to generate the uncertainty scores 114.

In some implementations, the uncertainty scoring neural network 112 can be configured to process data characterizing positions of each of the previously generated network outputs 108 as part of generating the uncertainty scores 114. As an example, the uncertainty scoring neural network 112 can be configured to process a model input that includes a masked sequence of elements that represents the output sequence 104 as of each iteration and can generate respective uncertainty scores 114 for each masked element as of the iteration.

In some implementations, the uncertainty scoring neural network 112 can be configured to process the same model input as the generative model 106 for each iteration. For example, in some implementations, the uncertainty scoring neural network 112 and the generative model 106 can include one or more shared processing layers (e.g., the uncertainty scoring neural network 112 can include one or more processing layers from the generative model 106). When the uncertainty scoring neural network 112 shares one or more processing layers with the generative model 106, the uncertainty scoring neural network 112 can process the model input at each iteration using the one or more shared processing layers and can generate the uncertainty scores 114 for the iteration by processing the resulting output from the one or more shared processing layers.

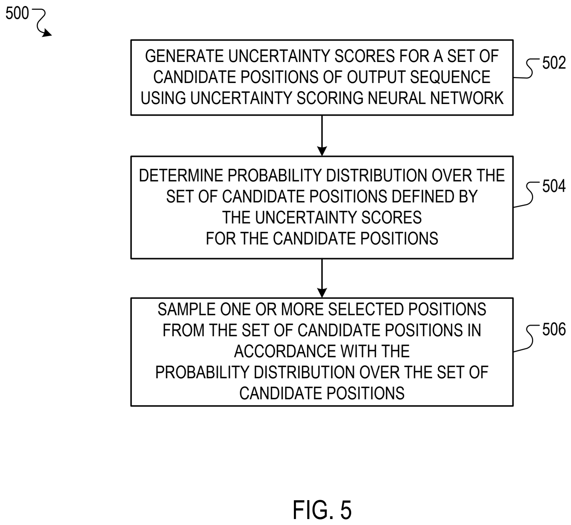

The sequence generation system 100 can determine the selected positions 110 of the output sequence 104 for each iteration by processing the uncertainty scores 114 generated by the uncertainty scoring neural network 112 for the iteration using a selection system 116. The selection system 116 can determine the selected positions 110 at each iteration by any of a variety of methods. For example, in some implementations, the selection system 116 can use a selection criteria to determine the selected positions 110 based on the uncertainty scores 114, such as by determining the selected positions 110 to be one or more positions of the output sequence 104 that have, e.g., the smallest uncertainty scores generated by the uncertainty scoring neural network 112, the largest uncertainty scores generated by the uncertainty scoring neural network 112, and so on. As another example, the selection system 116 can determine the selected positions 110 by sampling the selected positions 110 from a distribution determined using uncertainty scores 114. An example process by which the selection system 116 can sample the selected positions 110 from a distribution determined using uncertainty scores 114 is described in more detail below with reference to FIG. 5.

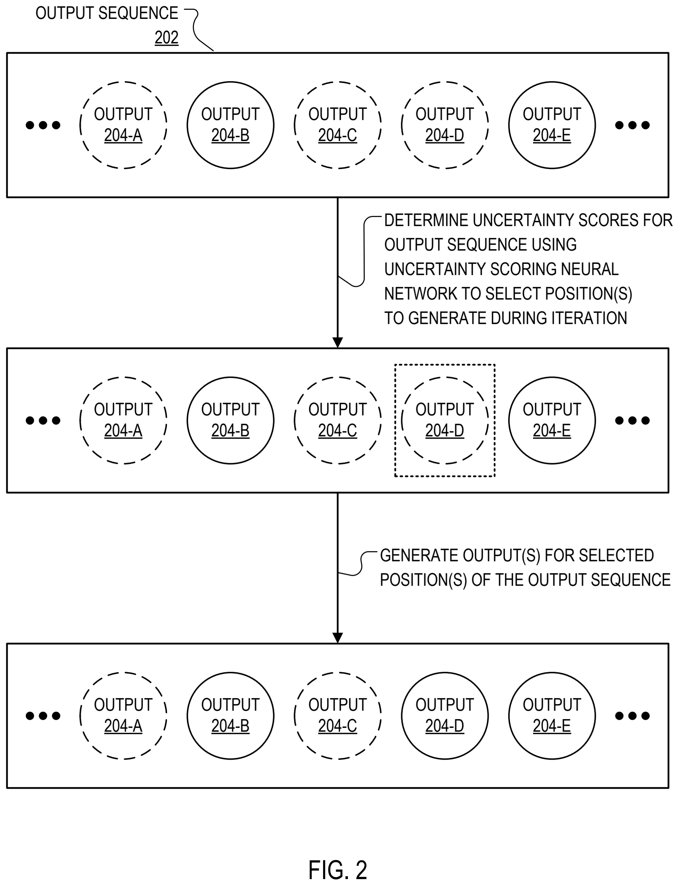

An example process by which the sequence generation system 100 can generate the output sequence 104 following an ordering determined using the uncertainty scoring neural network 112 is described in more detail below with reference to FIGs. 2-4.

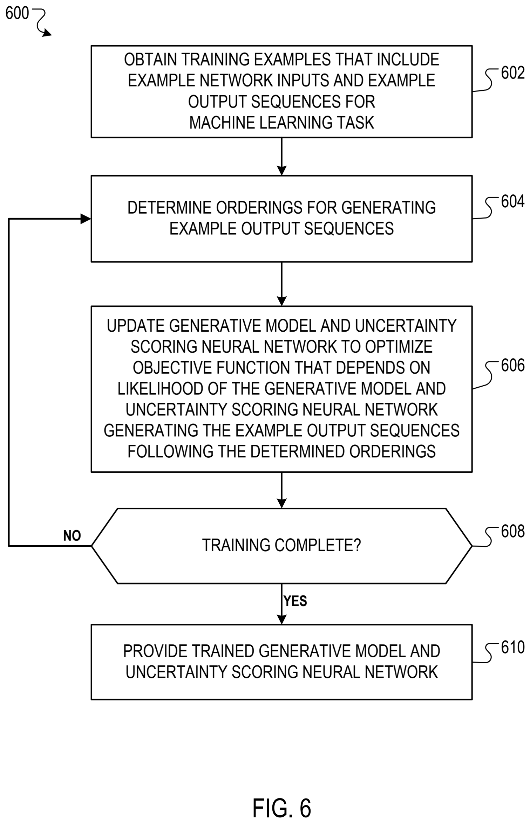

As described in more detail below with reference to FIG. 6, the generative model 106 and the uncertainty scoring neural network 112 can be jointly trained to generate example output sequences for the machine learning task. In particular, the generative model 106 and the uncertainty scoring neural network 112 can be jointly trained to generate the example sequences of network outputs using variational inference (e.g., with the orderings of the network outputs determined using the uncertainty scoring neural network treated as latent variables for the variational inference). For example, the generative model 106 and the uncertainty scoring neural network 112 can be jointly trained to optimize a shared objective function (in some implementations, but not necessarily, an Evidence Lower Bound on the log-likelihood of the data), determining gradients of this shared objective function with respect to the parameters of both the uncertainty scoring network and the generative model, and using these to update both networks. Following such training, the generative model 106 can be trained to generate elements of the example output sequences following orderings determined using the uncertainty scoring neural network 112, while the uncertainty scoring neural network 112 can be trained to generate uncertainty scores 114 that characterize orderings by which the generative model 106 can most accurately generate the example output sequences.

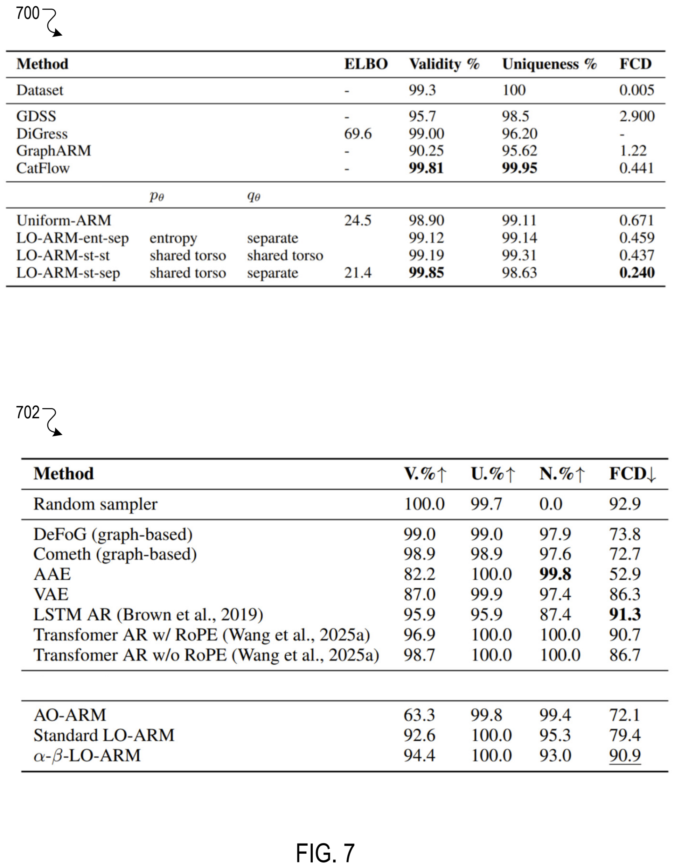

The uncertainty scoring neural network 112 can therefore be trained to generate uncertainty scores 114 that characterize an accuracy with which the generative model 106 can generate network outputs for the output sequence 104 at each iteration. By determining the selected positions 110 for generating the network outputs 108 for the output sequence 104 using the uncertainty scores 114 at each iteration, the sequence generation system 100 can therefore prioritize generating network outputs 108 for the output sequence 104 that the generative model 106 can most accurately generate at each iteration. As illustrated by the experimental results presented in FIG. 7, generating the output sequence 104 following the ordering determined using the scores 114 generated by the uncertainty scoring neural network 112 can therefore enable the sequence generation system 100 to more accurately generate the output sequence 104 as compared to conventional methods that involve generating output sequences following, e.g., fixed orderings of the output sequence 104, random orderings of the output sequence 104, and so on.

Example machine learning tasks and example architectures for the generative model 106 are described below.

In some implementations, the machine learning task can include processing an input prompt to generate an output data item. The input prompt and the output data item can include any of a variety of modalities of data, e.g., text data, image data, audio data, structured numerical data, and so on. In some implementations, the input prompt and/or the output data item can include multi-modal data, e.g., data for multiple different modalities.

In some implementations, the requested machine learning task can be a reinforcement learning task that involves controlling an agent to perform one or more agent tasks while interacting with an environment. In the context of reinforcement learning, the generative model 106 can be considered to be a policy for the agent, the prompts for the requested machine learning task can include observations of an environment of an agent and the output data items for the requested machine learning task can characterize actions for the agent to perform the agent's tasks.

The generative model 106 can be configured to process inputs of any of multiple modalities, e.g., image, video, audio, text, or any other appropriate input data modality for the requested tasks, or any combination thereof. Similarly, the generative model 106 can be configured to process outputs of any of multiple modalities, e.g., image, video, audio, text, or any other appropriate output data modality for the requested tasks, or any combination thereof. The generative model 106 can have a single set of model parameters while, at the same time, being substantially flexible such that it is able to process model inputs that include any one or any combination of the input data modalities for the requested tasks and such that it is able to generate model outputs that include any one or any combination of the output data modalities for the requested tasks.

For example, the generative model 106 can be a sequence processing neural network configured to generate output sequences (e.g., output token sequences) representing model outputs for the requested tasks by processing input sequences (e.g., input token sequences) representing model inputs for the requested tasks. As a further example, the generative model 106 can be an auto-regressive generative model (e.g., a Transformer, a recurrent neural network, etc.) that can auto-regressively generate output sequences for the requested tasks. A transformer neural network is a neural network that includes a stack of transformer blocks, each typically including an attention or self-attention neural network layer, generally followed by a feedforward neural network layer (where a self-attention neural network layer applies a self-attention operation, e.g., QKV self-attention, to elements of an embedding, to update each element of the embedding).

Generally, prior to the training of the generative model 106 by the system 100, the generative model 106 can have already been trained across one or more previous training stages.

For example, the one or more previous training stages can include a pre-training stage. During the pre-training stage, the generative model 106 can have been trained by the system 100 or a separate system to perform one or more pre-training tasks.

As a particular example, when the generative model 106 is a sequence processing neural network, the one or more pre-training tasks can be next token prediction tasks, e.g., tasks that requires predicting, given a current sequence of tokens, a next token that follows the current sequence in training data for the pre-training tasks. For example, as part of pre-training, the generative model 106 can have been trained to optimize a maximum-likelihood objective on a large dataset of text in one or more natural languages, e.g., text that is publicly available from the Internet or another text corpus, a large dataset of computer code in one or more programming languages, e.g., Python, C++, C#, Java, Ruby, PHP, and so on, e.g., computer code that is publicly available from the Internet or another code repository, a large dataset of audio samples, e.g., audio recordings or waveforms that represent the audio recordings, a large dataset of images where each image includes an array of pixels, a large dataset of videos where each video includes a temporal sequence of frames, or a large multi-modal dataset that includes a combination of two or more of these datasets.

As a further example, as part of pre-training, the generative model 106 can have been trained to optimize a maximum-likelihood objective on a dataset of example model inputs and example model outputs for a set of example tasks.

As another example, the one or more previous training stages can include one or more additional training stages, e.g., that occur after the pre-training stage. For example, the one or more previous training stages can include any one or more of: a supervised fine-tuning stage, a reinforcement learning stage, a preference learning stage, an instruction tuning stage, and so on.

In other words, prior to training by the system 100, the generative model 106 can be pre-trained using any appropriate conventional training methods to perform the requested tasks using training data that includes example model inputs and example model outputs for a set of example tasks.

As described above, the generative model 106 can be a language model or vision language model neural network. In general, a (vision) language model neural network can be a neural network that has been trained so that, given a text prompt that includes a sequence of tokens in a natural language, the neural network can generate the next token in the sequence. This process can be repeated to extend the text prompt one token at a time to generate a natural language output, i.e., to generate the natural language output auto-regressively token by token. At each "time step," the language model neural network processes the current sequence to generate a probability distribution over a vocabulary of tokens. The next token can then be selected using the probability distribution, e.g., by sampling from the distribution using nucleus sampling or another sampling technique or by selecting the highest-probability token. The tokens in the vocabulary can include any of a variety of tokens, e.g., some combination of words, sub-words, characters, punctuation and other symbols, and numbers. In general, the language model neural network is trained on a corpus of text made up of tokens from the vocabulary (and optionally other tokens that can be mapped to a designated out-of-vocabulary token), to predict the next token in a sequence of tokens from the training data. The (vision) language model neural network can be an autoregressive Transformer neural network.

A (vision) language model neural network can be made to perform a particular task by providing a natural language description of the desired response as an input or "prompt" (input sequence). In some cases, the prompt can be a few-shot prompt where a few, e.g., 1 to 10, examples of a query and an example output are provided in the text prior to the actual query.

A (vision) language model neural network can be "fine-tuned" to perform a particular task, by obtaining a pre-trained language model neural network trained on a large corpus of examples as previously described and then further training part of all of the language model neural network on a relatively small number of examples particular to the type of task that is to be performed.

The generative model 106 can be a large language model neural network, e.g., one that has greater than 1 billion, 10 billion or 100 billion trained parameters. The generative model 106 can have been trained on greater than 10 billion, 100 billion or 1000 billion words or tokens representing words or other tokens.

The model inputs and the model outputs can be sequences of elements referred to herein as tokens. A "token" as used in this specification is a vector of numerical values having a specified dimensionality, i.e., the number of numerical values is constant across different tokens. Each token can include a respective predetermined or learned embedding (an ordered collection of numerical values having a pre-determined dimensionality.

In some implementations, the model inputs and the model outputs can include tokens representing text, e.g., words, wordpieces or characters, in a natural or computer language. For example, text can be received, e.g., as a series of encoded characters, e.g., UTF-8 encoded characters; such "characters" can include Chinese and other similar characters, as well as logograms, syllabograms and the like. A text encoder, i.e., a tokenizer, can process a sequence of text to represent the text as a series of text tokens from a vocabulary of text tokens, e.g., that each represent words, wordpieces or characters in a natural or computer language. The computer language can be any formal language used to communicate with a computer, e.g., a markup language, or a command or configuration language, or a data exchange language such as JSON, or a programming language. The tokenizer can, e.g., implement BPE (Byte Pair Encoding) or Wordpiece tokenization. Optionally the text can be obtained from audio data representing speech; the output tokens can be converted into audio data that represent speech corresponding to the text.

In some implementations, the model inputs and the model outputs can include image tokens representing images. Each image token can include a block encoding of values of the pixels in a different region of an image that maps a set of values of the pixels to a respective image token. The block encoding can be obtained using a neural network such as a Transformer neural network.

As used herein an image can be any still or moving image, i.e., the image can be part of a video, in 2D or 3D, and can be a monochrome, color or hyperspectral image, i.e., including monochrome or color pixels. As defined herein an "image" includes a point cloud, e.g., from a LIDAR system, and a "pixel" includes a point of the point cloud. An image can be captured by a camera or other image sensor from the real world; and objects in the image can include physical objects, represented by the image.

In some implementations, the model inputs and the model outputs can include tokens representing audio waveforms. For example, a set (sequence) of input or output tokens can represent audio data representing a waveform e.g., instantaneous audio amplitude values or time-frequency audio data. Each audio token can include a block encoding of the audio waveform in a different time segment of the audio that maps a set of values representing the audio waveform to a respective image token. The block encoding can be obtained using a neural network such as a Transformer neural network.

In a multimodal system audio data or an image can be flagged by a start-of-audio token or start-of-image token.

In some implementations the model inputs can include tokens representing text, pixels of an image, or an audio waveform and the generative model 106 can generate the output sequence of tokens to perform tasks represented by the input sequence of tokens.

In some implementations the requested machine learning task can include an image or audio generation task. The input sequences of tokens can then characterize images or audio to be generated, and the output sequences of tokens can include tokens defining images or audio waveforms characterized by the input sequences of tokens, e.g., text tokens.

In some implementations the requested machine learning task can include an image or audio processing task. The input sequences of tokens can define image or audio inputs, and the output sequences of tokens can include tokens defining text that describes the image or audio inputs. As some examples, the requested machine learning task can include a speech recognition task, an object or action detection task, a classification task, a captioning task, a question-answering task, or a character or word recognition task.

In some implementations the requested machine learning task can include a multimodal processing task in which the input sequences of tokens and/or the output sequences of tokens can include multimodal data. For example, an input sequence of tokens can characterize both an image or audio input and a text input and a corresponding output sequence of tokens can include tokens defining a result of an image or audio processing task defined by the text, such as an open vocabulary classification or object detection task.

In general, multimodal data includes a combination of two or more different types of data, e.g., two or more of audio data, image data, text data, or graph data. As one example the multimodal data can include audio-visual data, comprising a combination of pixels of an image or of video and audio data representing values of a digitized audio waveform. As another example the multimodal data can include a combination of i) text data representing text in a natural language and ii) pixels of an image or of video or audio data representing values of an audio waveform.

Some examples of multimodal tasks include: open-vocabulary image classification (the output can classify the image input based on a text input comprising text descriptions of one or more classes in the image); open-vocabulary object detection (the output can detect one or more objects in the image input based on a text input comprising text descriptions of the one or more objects); image captioning (the output can comprise text that describes the image input); text-based image search (the output can identify from amongst multiple images in the image input one or more images that meet a text description of images to be retrieved, the text description being provided in a text input); image-based retrieval (the output can identify from amongst multiple images in the image input one or more images that match a further image in the image input), and so on. The multimodal processing tasks to be performed can be defined by text in the input sequences.

In some implementations the requested machine learning task can include an agent control task in which the agent interacts with an environment to perform the task. The agent can be a mechanical agent such as a robot or (semi-) autonomous vehicle, interacting with a real-world environment to perform the task. The generative model 106 can be trained to control a simulated version of the agent in in a simulated version of the environment and then afterwards used to control the real agent in the real-world environment. The input sequence of tokens can include tokens that represent an observation of the environment, e.g., an image captured by a camera or other imaging device from a real-world environment. The output sequences of tokens comprises tokens that define one or more actions to be performed by the agent in the environment in response to the observation.

In some implementations the generative model 106 can be stored on a user computing device, i.e., a device local to the user, such as a mobile device, e.g., a mobile phone, or a smart speaker.

In some implementations the generative model 106 can be implemented on a remove server in communication with a user computing device over a wired or wireless network communications link between the user computing device and the server.

The user computing device can be provided with an input mechanism, such as a text or voice interface, that enables user input from the user in a natural language. The user computing device can be provided with an output mechanism that provides a system output for the user in the or another natural language, e.g., as speech or text; or in some other way, e.g., by displaying an image. The input and output mechanisms can include, e.g., a keyboard, microphone, speaker, display, and/or camera.

As an example, the input mechanism can include a system configured to input audio data characterizing a speech waveform of speech representing the input from the user in a natural language, and a system configured to convert the audio data into tokens representing the speech in the natural language, e.g., representing a transcription of the spoken input. The output mechanism can include a system configured to receive tokens representing the output for the user in the or another natural language and a system configured to convert the received tokens into audio data representing a waveform of speech representing the output to the user in the natural language, i.e., representing spoken words.

As a further example, the generative model 106 can be deployed in an environment that enables a user to provide a request for the system, e.g., to process a multimodal input to generate a corresponding output sequence output. Users can provide requests, e.g., by way of a user interface or through an application programming interface (API). The request can be transmitted from a user device, e.g., over a data communications network such as the internet, to one or more computers implementing the system, e.g., in a data center. The system can generate a output sequence and then transmit the output sequence to a user device over a data communications network.

A user computing device can be provided, as an interface for the generative model 106, with an input mechanism that enables user input from the user in a natural language and an output mechanism that provides a system output to the user in the natural language. The input and output mechanism can include, e.g., a keyboard and display. Also or instead the input and output mechanism can include a speech-based mechanism. For example, the input mechanism can include a system configured to input audio data characterizing a speech waveform of speech representing the input from the user in the natural language and configured to convert the audio data into tokens representing the speech in the natural language, e.g., representing a transcription of the spoken input. The output mechanism can include a system configured to receive tokens representing the output to the user in the natural language and a system configured to convert the received tokens into audio data representing a waveform of speech representing the output to the user in the natural language, i.e., representing spoken words.

In some implementations the input sequences include one or more natural language statements relating to an environment, in particular a real-world environment, and include natural language requests relating to the environment. Similarly the output sequences can include natural language replies or natural language output statements that also relate to the environment, i.e., providing information relating to the environment, in some implementations relating to or specifying actions to be taken in the environment.

The generative model 106 can be used for diagnosing faults, or for correcting undesired behavior, in a mechanical or computing system operating in the real world environment. The model inputs can include descriptions and/or images of observations of the mechanical or computing system, e.g., of operation of the system, optionally obtained from one or more sensors sensing a condition or operation of the system. An image observation can be converted into a text description, e.g., using an image captioning system or in other ways. The generated output sequences may include images, audio, or text that identify (describe) likely causes of the faults or undesired behavior. This can be used to repair the faults or correct the behavior.

The generative model 106 can be used for controlling a mechanical agent such as a robot or vehicle. For example, the model inputs can include descriptions of tasks to be performed, and the generated output sequences can include lists of sub-tasks to be performed by the mechanical agent (trained to perform such sub-tasks), in order to perform the tasks.

As another example, the environment can be a computer security monitoring environment, e.g., the system can be deployed as part of a system that monitors the security of one or more computers. For example, the environment can be a computer network security monitoring environment, and the system can be deployed as part of a system that monitors the security of one or more computers on a computer network, e.g., a wireless network, a cellular network, a local area network and/or the internet. As another example, the environment can alternatively or additionally be a computer system security monitoring environment and the system can be deployed as part of a system that monitors the system for the presence of computer viruses and/or an unresolved software vulnerability, e.g., a zero-day exploit. A software vulnerability can be resolved by updating the software (e.g., patching) and/or removing (e.g., uninstalling) the software from the computer system. In these examples, the natural language requests can query whether computer security incidents have been resolved (e.g., "has the incident been resolved?") and the model inputs can include relevant statements from system logs, i.e., that are potentially relevant to the events being queried. A computer security incident can be, e.g., a data breach, an unauthorized log-in or other access of a secured system, a detection of a computer virus or detection of a software vulnerability. An incident can be "resolved" when the underlying incident is no longer a threat to the security of the computer system e.g., the computer virus has been removed, the access to the secured system has been removed, the data breach has been mitigated, or the software having the vulnerability has been updated or removed. The system can use the model inputs 204 to generate replies to the requests that include natural language statements indicating whether the incidents have been resolved, optionally displaying evidence used to determine this.

The model inputs can include one or more of: code snippets from the software code, system logs, program logs, or other artifacts that should be left on the computer by running the program, or verification rules that represent requirements for the execution of the software program, or natural language statements describing the computer system on which the software executes. In general, the model inputs can include relevant statements, i.e., statements that are potentially relevant to the events being queried.

In some implementations obtaining input data from the environment can include obtaining, from the system logs, the data characterizing the computer network, or both, or from other data as described above, one or more observations of the computer network (which here includes computers on the network), and processing the one or more observations to generate a natural language representation of the one or more observations. The natural language requests can relate to the computer security incidents or to the secure operation of the computer network. The requested machine learning task can include using the natural language representations of the one or more observations to provide one or more of the natural language statements describing the computer network, and using the natural language replies or the natural language output statements to identify a security status of the computer network or a security flaw in the computer network.

As another example, the environment can be a software testing or evaluation environment, e.g., the system can be deployed as part of a system that tests software before deployment or that evaluates already-deployed software to identify bugs. In these examples, when the system tests software before deployment, the natural language requests can ask whether the software will execute as intended, and the model inputs can include code snippets from the software code and, optionally, natural language statements describing the computer system on which the software will execute. The generative model 106 can process the model inputs to generate replies that indicate whether the code will execute as intended, optionally displaying evidence used to determine this. When the system monitors the execution of code after deployment, the natural language requests can ask whether a software program, or a portion of a software program, has executed as intended, and the model inputs can include one or more of: code snippets from the software code, system logs, program logs, or other artifacts that should be left on the computer by running the program, or verification rules that represent requirements for the execution of the software program, or natural language statements describing the computer system on which the software executes. The model 106 can then process the model inputs to generate replies that indicate whether the code has executed as intended, optionally displaying evidence used to determine this. As a particular example, the software program can be part of the boot up of a computer, and the model 106 can generate a reply each time that the computer starts up to verify whether the computer will function correctly after start up.

As another example, the environment can be an educational environment, e.g., the system can be deployed as part of an education software program that assists a user in learning or practicing one or more corresponding skills. In these examples, the model inputs can include natural language statements describing or referencing a scenario or scene in a real-world or imagined environment, and the requests can be questions about the scenario or scene.

As another example, the environment can be an information retrieval environment, e.g., the system can be deployed as part of a search engine or other software that allows a user to search for information in a corpus of documents, e.g., the Internet or another electronic document corpus. In these examples, the requests can be any appropriate natural language question, and the replies can optionally include evidence such as include relevant statements from the corpus of documents, e.g., as identified by searching the corpus using conventional information retrieval techniques.

In some implementations, the generative model 106 is a visual language model (VLM). In general, the VLM can process input sequences that include tokens that each represent natural language or (a part of) an image or video to generate output tokens that each represent natural language or (a part of) an image or video. For example, the VLM can be configured to describe an image or video using natural language, e.g., to perform an image or video captioning task. As another example, the VLM can be configured to process input tokens representing an image and text tokens representing a query about the image or a request to modifying the image, and to generate output tokens representing an answer to the query or representing a version of the image that has been modified in accordance with the request. The VLM can generate output tokens representing an image or video that is generated in response to input tokens providing a visual and/or audio and/or textual description of a desired image or video.

In some implementations, the "language" of the language model is not a natural language such (e.g., English), but can instead be a text-based encoding describing an entity or class of entities, e.g., a chemical or biological entity, such as a chemical structure or molecule. For example, the text-based encoding can be a sequence of tokens that defines a molecule or protein, e.g., a sequence specifying an arrangement of atoms or chemical functional groups in a molecule, or the amino acid residues of a protein. The language model can be referred to as a chemical and/or biological language model in such cases. The model inputs therefore be input strings defining chemical (e.g., protein) structures and the model outputs can include output strings defining different chemical structures from the input strings. The strings can be in the Simplified Molecular Input Line Entry System, SMILES, format, for example.

In some implementations, the molecule design task comprises a drug discovery task for identifying or optimizing candidate drug molecules. For example, the generative model can be configured to perform molecular design from scratch, where the network input characterizes a chemical composition (e.g., a fully masked input or a set of property constraints) and the system generates a spatial structure or topology for a candidate drug molecule. Also or instead the molecule design task can comprise so-called scaffold hopping molecular design or molecular optimization where, e.g., the network input comprises elements representing a fixed molecular scaffold and the system 100 can generate output elements representing variable regions for the candidate drug molecule. In these implementations, the system generates chemical substructures for the variable regions to complete the candidate drug molecule, e.g., an infilling or data completion task.

The generated molecule(s) may be evaluated using a metric such as a Fréchet ChemNet Distance (FCD) that measures how similar the candidate drug molecule is in chemical and biological properties to actual molecules, and/or using in silico modelling, and or by synthesising the molecule, e.g. for testing in vitro or in vivo.

In another example of a computer language text generation task, a model input can include an image or video and a sequence of text in a computer language for performing a task in relation to the image or video, e.g., a data processing task that involves analyzing the content of the image or video to provide a result of the analysis or, e.g., a search to search for information relating to the content of the image or video. The computer language in the model output can include computer language for invoking a function or calling one or more external APIs. Merely as one example, such an output can be formatted as a JSON object. As previously, the sequence of text in a multimodal input can define the task to be performed and the second modality input can include, e.g., an image or video in relation to which the task is to be performed, e.g., a task that involves manipulation of particular types of data that may benefit from access to an API such as mathematical data, date/time related data, scientific data, recent data that may post-date training of the model (that can be accessed by a search function or API), and so on. After training, when the model is used in inference, the model output can include text in the or another computer language for performing a task, e.g., as described above, in relation to an image or video in the second modality input. The requested machine learning task can then include using the text in the computer language to perform the task.

In some implementations, the generative model 106 can be used to interact with a human user of a digital assistant such as a smart speaker, smart display, or other device. For example, information defining a task can be obtained from the digital assistant, and the digital assistant can be used to instruct the user to perform the task. For example, this can include receiving, at the digital assistant, a request from the user for assistance and determining, in response to the request, a series of tasks for the user to perform, e.g., steps or sub-tasks of an overall task. Then for one or more tasks of the series of tasks, e.g., for each task, e.g., until a final task of the series the digital assistant can be used to output to the user an indication of the task, e.g., step or sub-task, to be performed. This can be done using natural language, e.g., on a display and/or using a speech synthesis subsystem of the digital assistant. Visual, e.g., video, and/or audio observations of the user performing the task can be captured, e.g., using the digital assistant. A system can then be used to determine whether the user has successfully achieved the task, e.g., step or sub-task, i.e., from the answer as previously described. If there are further tasks to be completed the digital assistant can then, in response, progress to the next task (if any) of the series of tasks, e.g., by outputting an indication of the next task to be performed. In this way the user can be led step-by-step through a series of tasks to perform an overall task.

As an illustrative example, a user can be interacting with a digital assistant and ask for help performing an overall task consisting of multiple steps, e.g., cooking a pasta dish. While the user performs the task, the digital assistant receives audio and/or video inputs representative of the user's progress on the task, e.g., images or video or sound clips of the user cooking. The digital assistant uses model 106 as described above, in particular by providing it with the captured audio and/or video and a question that asks whether the user has completed a particular step, e.g., 'Has the user finished chopping the peppers?', to determine whether the user has successfully completed the step. If the answer confirms that the user has successfully completed the step then the digital assistant progresses to telling the user to perform the next step or, if at the end of the task, or if the overall task is a single-step task, then the digital assistant may indicate this to the user. The digital assistant can then stop receiving or processing audio and/or video inputs to ensure privacy and/or reduce power use.

The digital assistant can also include a user interface to enable a user to request assistance and to output information. In implementations this is a natural language user interface and can include a keyboard, voice input-output subsystem, and/or a display. The digital assistant can further include an assistance subsystem configured to determine, in response to the request, a series of tasks for the user to perform. In implementations this can include a generative (large) language model, in particular for dialog. The digital assistant can have an observation capture subsystem to capture visual and/or audio observations of the user performing a task; and an interface for the above-described language model neural network (which may be implemented locally or remotely). The digital assistant can also have an assistance control subsystem configured to assist the user. The assistance control subsystem can be configured to perform the steps described above, for one or more tasks e.g., of a series of tasks, e.g., until a final task of the series. More particularly, the assistance control subsystem can output to the user an indication of the task to be performed, capture, using the observation capture subsystem, visual or audio observations of the user performing the task, determine from the above-described answer whether the user has successfully achieved the task. In response, the digital assistant can progress to a next task of the series of tasks and/or control the digital assistant, e.g., to stop capturing observations.

In some implementations, a particular task that is to be performed by the generative model 106 can be described by part or all of a sequence of text in an input to the model 106. For example, in a model input that includes an image such a prompt can specify, e.g., "Generate a caption", "Generate a description", "Answer the following question: [about the image or video]", or "Detect a person". When the model 106 is used for an agent control task a prompt can define, e.g., "Take the knife out of the drawer", or "Q: What action should the robot take to take the knife out of the drawer?". Also or instead such a prompt can give one or more examples of a task to be performed. The model 106 can be trained on multiple natural and/or computer languages and the prompt may then specify a language to use.

A few further examples of some machine learning tasks that can be performed by a generative model 106 trained as described herein follow. The tasks described below can include tasks that require spatial awareness or other context from input images or video. For example, a prompt may ask "What is the object in the top left corner?".

In general, for the tasks below the model 106 can have been trained or fine-tuned on examples of the input and output for the task. For example, the model 106 can have been trained using still or moving images containing one or more objects or actions, and corresponding sequences of text or other data e.g., describing or classifying the images. However large, "foundation" models can, in general, perform some tasks zero-shot, i.e., without having been specifically trained on those tasks.

As one example the task can include an object or action detection task. For example, a generated output sequence can include or represent text that describes or otherwise labels detected object(s) or action(s) in an input that includes an image or audio, and can include coordinates such as bounding-box coordinates for the detected object(s) or action(s), e.g., "10 20 90 100 cat 20 40 100 100 dog".

As another example the task can include a classification task, e.g., an object or action classification task. A generated output sequence can include data, e.g., text, that classifies the object(s) or action(s) in represented in conditioning data, e.g., in an image or audio, into one of a plurality of classes, or that otherwise classify object(s) or action(s) represented in the conditioning data.

As another example the task can include a still or moving image describing task, e.g., a captioning task (which, as used here, includes an audio description task to explain what is happening in an image). A generated output sequence can include data, e.g., text, describing an input image or video. For example, a generated output sequence can provide a caption or description or it can count objects in the image or video, or it can provide some other form of description.

As another example the task can include a still or moving image question-answering task. A generated output sequence can include data, e.g., text, that answers a question about an input, e.g., an input image or audio, where the question is also specified in the input, e.g., as sequence of text. This may be used, e.g., to answer questions about visual plots and charts or about sounds.

As another example the task can include a character or word recognition task, e.g., an OCR (optical character recognition) task. An input can include a still or moving image and a generated output sequence can include text that represents characters or words in the input, e.g., in a natural language.

As another example the task can include a still or moving image generation task. A generated output sequence can include image data defining values for pixels of a still or moving image, and an input, e.g., a sequence of text, may describe or characterize the image to be generated. Merely as an example, an image of a plot or chart can be generated to represent the input, e.g., comprising text.

As another example the task can include a computer language text generation task. An input can include a natural language description of a task to be performed, and optionally an image (if the task is to be performed on or in relation to an image), and a generated output sequence can include text in a computer language to perform the task, e.g., a task of analyzing the content of the image to provide a result of the analysis or to search for information relating to the content of the image.

As a particular example the computer language in a generated output sequence can include computer language for invoking a function or calling one or more external APIs. Merely as one example, such an output sequence can include data formatted as a JSON object. As previously, an input can define a task to be performed and can also include an image in relation to which the task is to be performed. In general the task can involves manipulation of particular types of data that can benefit from access to an API such as mathematical data, date/time related data, scientific data, recent data that may post-date training of the model 106 (that can be accessed by a search function or API), and so on; and the generated output sequence can include text in a computer language for performing the task. The requested machine learning task can include using the text in the computer language to perform the task.

In general where a generated output sequence includes text, such text can be converted to speech representing the text, and an audio (speech) output provided.

In some implementations the task can include an agent control task in which the agent interacts with an environment to perform the agent control task. In these implementations an input can include an observation characterizing the environment. For example, an input can include a sequence of text that defines a task to be performed by the agent and an image representing an observation of the environment, e.g., captured by a camera or other imaging device from a real-world environment. A generated output sequence can include an action selection output, e.g., including text, that is used to select one or more actions to be performed by the agent in the environment in response to the observation. As an illustration the generated output sequence can define an action as text such as "A: 132 114 128 5 25 156", that can be converted into a control signal for a mechanical agent, such as a robot, e.g., "$\Delta T$ = [0.1, -0.2,0] $\Delta R$ = [10°, 25°, -7°]". The action selection output can also or instead define one or more low-level skills, e.g., from a vocabulary of previously learnt skills. As before, a sequence of text in a model input can describe the task to be performed, e.g., "What action should the robot take to [perform task]". Examples of systems for controlling an agent that can be fine tuned as described herein can include PaLM-E (Driess, et al., arXiv:2403.03378), RT-1 (Brohan, et al., arXiv:2212.06817), and RT-2 (Brohan, et al., arXiv:2407.15818).

In some agent control implementations, the environment is a real-world environment and the agent is a mechanical agent interacting with the real-world environment, e.g., a robot or an autonomous or semi-autonomous land, air, or sea vehicle operating in or navigating through the environment, and the actions are actions taken by the mechanical agent in the real-world environment to perform the task. For example, the agent can be a robot or other mechanical agent interacting with the environment to accomplish a specific task, e.g., to locate or manipulate an object of interest in the environment or to move an object of interest to a specified location in the environment or to navigate to a specified destination in the environment. In these implementations, the observations can include, e.g., one or more of: images, object position data, and sensor data to capture observations as the agent interacts with the environment. The actions can define control signals to control the robot or other mechanical agent, e.g., positions, torques, or other control signals for the parts of the mechanical agent, or higher-level control commands.

In some agent control implementations the agent can be a human agent and the environment can be a real-world environment. For example, the agent can be a human user of a digital assistant such as a smart speaker, smart display, or some other device that is used to instruct the user to perform actions. The task can include any real-world task that the user wishes to perform. The observations can be obtained from an observation capture subsystem, e.g., a monitoring system such as a video camera or sound capture system, to capture visual observations of the user performing the task. The actions can include instructions in the form of, e.g., text, image, video, or audio data such as speech, that guide the user in performing the task.

The described systems and techniques can be applied to a wide range of different types of input sequences and output sequences. In implementations of the described techniques the tokens can represent, characterize, or encode any type of information in a sequence, e.g., stream of data. The term "represent" is used, below, generally to refer to any way in which a token can encode part of a sequence. The tokens may include marker tokens, such as a start of sequence token, an end of sequence token, and a separator token (indicating a separation or break between two distinct parts of a sequence). The tokens may, but need not be, drawn from a defined vocabulary of tokens.

Some of these implementations can be used for natural language tasks such as providing a natural language response to a natural language input, e.g., for question answering, or for text completion. In some implementations the input sequence can represent text in a natural language and the output sequence may represent text in the same natural language, e.g., a longer item of text. For example, in some implementations the input sequence can represent text in a natural language and the output sequence may represent the same text with a missing portion of the text added or filled in. For example, the output sequence can represent a predicted completion of text represented by the input sequence. Such an application can be used, e.g., to provide an auto-completion function, e.g., for natural language-based search. In some implementations the input sequence can represent a text in a natural language, e.g., posing a question or defining a topic, and the output sequence can represent a text in a natural language which is a response to the question or about the specified topic.

As another example the input sequence can represent a first item of text and the output sequence can represent a second, shorter item of text, e.g., the second item of text can be a summary of a passage that is the first item of text. As another example the input sequence can represent a first item of text and the output sequence can represent an aspect of the first item of text, e.g., it can represent an entailment task, a paraphrase task, a textual similarity task, a sentiment analysis task, a sentence completion task, a grammaticality task, and in general any natural language understanding task that operates on a sequence of text in some natural language, e.g., to generate an output that classifies or predicts some property of the text. For example, some implementations can be used to identify a natural language of the first item of text, or of spoken words where the input is audio (as described below).

Some implementations can be used to perform neural machine translation. Thus in some implementations the input tokens can represent words, wordpieces, or characters in a first natural language and the output tokens can represent words, wordpieces or characters in a second, different natural language. That is, the input sequence can represent input text in the first language and the output sequence can represent a translation of the input text into the second language.

Some implementations can be used for automatic code generation. For example, the input tokens can represent words, wordpieces or characters in a first natural language and the output tokens can represent instructions in a computer programming or markup language, or instructions for controlling an application program to perform a task, e.g., build a data item such as an image or web page.

Some implementations can be used for speech recognition. In such applications the input sequence can represent spoken words and the output sequence can represent a conversion of the spoken words to a machine-written representation, e.g., text. Then the input tokens can include tokens representing an audio data input including the spoken words, e.g., characterizing a waveform of the audio in the time domain or in the time-frequency domain. The output tokens can represent words, wordpieces, characters, or graphemes of a machine-written, e.g., text, representation of the spoken input, that is representing a transcription of the spoken input.

Some implementations can be used for handwriting recognition. In such applications the input sequence can represent handwritten words, syllabograms or characters and the output sequence may represent a conversion of the input sequence to a machine-written representation, e.g., text. Then the input tokens can include tokens representing portions of the handwriting and the output tokens can represent words, wordpieces, characters or graphemes of a machine-written, e.g., text, representation of the spoken input.

Some implementations can be used for text-to-speech conversion. In such applications the input sequence can represent text and the output sequence can represent a conversion of the text to spoken words. Then the input tokens can include tokens representing words or wordpieces or graphemes of the text and the output tokens can represent portions of audio data for generating speech corresponding to the text, e.g., tokens characterizing a portion of a waveform of the speech in the time domain or in the time-frequency domain, or phonemes.

Some implementations can be used for a genomics task, where the input sequence represents a fragment of a DNA sequence or other molecule sequence and the output sequence is either an embedding of the fragment for use in a downstream task, e.g., by making use of an unsupervised learning technique on a data set of DNA sequence fragments, or an output for the downstream task. Examples of downstream tasks include promoter site prediction, methylation analysis, predicting functional effects of non-coding variants, and so on.

In some cases, the requested machine learning task is a combination of multiple individual machine learning tasks, i.e., the model 106 can be configured to perform multiple different individual machine learning tasks, e.g., two or more of the machine learning tasks mentioned above. For example, the model 106 can be configured to perform multiple individual natural language understanding tasks, with the model inputs including an identifier for the individual natural language understanding task to be performed on the model inputs.

In some implementations the input sequence and the output sequence represent different modalities of input. For example, the input sequence can represent text in a natural language and the output sequence can represent an image or video corresponding to the text; or vice-versa. In general, the tokens can represent image or video features and a sequence of such tokens can represent an image or video. There are many ways to represent an image (or video) using tokens. As one example an image (or video) can be represented as a sequence of regions of interest (RoIs) in the image, optionally including one or more tokens for global image features. For example, an image can be encoded using a neural network to extract RoI features; optionally (but not essentially) a token can also include data, e.g., a position encoding, representing a position of the RoI in the image. As another example, the tokens can encode color or intensity values for pixels of an image. As another example, some image processing neural network systems, e.g., autoregressive systems, naturally represent images as sequences of image features. As another example, a transformer-based sequence processing neural network system as previously described can be used to process images instead of or as well as text (e.g., if trained on images instead of or as well as text).

Thus in some implementations at least one of the input sequence and the output sequence is a sequence representing an image or video and can include tokens representing the image or video. For example, the input sequence can be a sequence of text, the input tokens can represent words, wordpieces, or characters and the output sequence can include output tokens representing an image or video, e.g., described by the text, or providing a visual answer to a question posed by the text, or providing a visualization of a topic of the text. In another example the input sequence can include a sequence of input tokens representing an image or video, and the output tokens can represent words or wordpieces, or characters representing text, e.g., for a description or characterization of the image or video, or providing an answer to a question posed visually by the image or video, or providing information on a topic of the image or video.

In some other implementations both the input sequence and the output sequence can represent an image or video, and both the input tokens and the output tokens can represent a respective image or video. In such implementations the method/system can be configured to perform an image or video transformation. For example, the input sequence and the output sequence can represent the same image or video in different styles, e.g., one as an image the other as a sketch of the image; or different styles for the same item of clothing.

In some implementations the input sequence represents data to be compressed, e.g., image data, text data, audio data, or any other type of data; and the output sequence a compressed version of the data. The input and output tokens can each include any representation of the data to be compressed/compressed data, e.g., symbols or embeddings generated/decoded by a respective neural network.

In some implementations the input sequence represents a sequence of actions to be performed by an agent, e.g., a mechanical agent in a real-world environment implementing the actions to perform a mechanical task. The output sequence can include a modified sequence of actions, e.g., one in which an operating parameter, such as a speed of motion or power consumption, has a limited value; or one in which or safety or other boundary is less likely to be crossed. Then both the input tokens and the output tokens may represent the actions to be performed.

In some implementations the input sequence represents a sequence of health data and the output sequence can include a sequence of predicted treatment. Then the input tokens can represent any aspect of the health of a patient, e.g., data from blood and other medical tests on the patient and/or EHR (Electronic Health Record) data; and the output tokens can represent diagnostic information, e.g., relating to a disease status of the patient and/or relating to suggested treatments for the patient, and/or relating to a likelihood of an adverse health event for the patient.

As a particular example the model 106 can be a multimodal neural network in which one or both of the model input (i.e., input sequence) and the model output (i.e., output sequence) include an image or audio. For example the generative model 106 can be configured to process an input sequence including visual tokens representing pixels of a still or moving image (which here may include a point cloud image), and/or data representing an audio waveform, e.g., values or features of the audio waveform such as audio tokens, and/or text tokens representing a sequence of text, to generate an output sequence, e.g., including text tokens representing the still or moving image or audio waveform, and/or a sequence of intensity value inputs for the pixels of an image or a sequence of values defining an audio waveform. A visual token can, e.g., represent multiple pixels in a region of the image, e.g., as features of the region. Such a multimodal model 106 can perform any of the previously described tasks, e.g., using a multimodal input, or by providing a multimodal output, or by converting between different input and output modes (e.g., text/image/audio). For example, it can generate text representing, describing (e.g., captioning), or otherwise characterizing an image or audio input, e.g., by answering a question related to the image or audio input, e.g., relating to a future, e.g., physical prediction of a state of objects represented by the image or audio. As another example it can generate an image or audio represented, described, or otherwise characterized by a text input, or otherwise in response to the text input, e.g., representing an image or audio answer to a text question.

FIG. 2 illustrates generating an output sequence 202 by unmasking elements of the output sequence 202 following an ordering determined using an uncertainty scoring neural network. In particular, FIG. 2 illustrates an iteration of generating the output sequence 202 by generating and including a network output within the output sequence 202.

As illustrated in FIG. 2, the output sequence 202 can include a plurality of outputs, e.g., including the outputs 204-A through 204-E. The output sequence 202 includes outputs that have not been generated as of the start of the iteration, such as the outputs 204-A, 204-C, and 204-D of the output sequence 202 illustrated in FIG. 2. The output sequence 202 can also include previously generated outputs (e.g., as generated during previous iterations), such as the outputs 204-B and 204-E of the output sequence 202 illustrated in FIG. 2. For example, the outputs 204-A, 204-C, and 204-D can be masked elements of the output sequence 202 and the outputs 204-B and 204-E can be unmasked elements of the output sequence 202 as of the start of the iteration.

As described above with reference to FIG. 1, a sequence generation system (e.g., the sequence generation system 100 of FIG. 1) can use an uncertainty scoring neural network to generate uncertainty scores for each of the outputs of the output sequence 202 that have yet to be generated as of the iteration. For example, for the iteration of generating the output sequence 202 illustrated in FIG. 2, the sequence generation system can generate uncertainty scores for the outputs 202-A, 204-C, and 204-D.

The sequence generation system can use the uncertainty scores to select one or more positions of the output sequence 202 to generate during the iteration. For example, as illustrated in FIG. 2, the sequence generation system can select the position of output 204-D as a position to generate an output to include within the output sequence 202 during the iteration.

The sequence generation system can then generate outputs for each of the selected positions of the output sequence 202 using a generative model. For example, as illustrated in FIG. 2, the sequence generation system can generate the output 204-D using the generative model and can update the output sequence 202 to include the generated output 204-D.

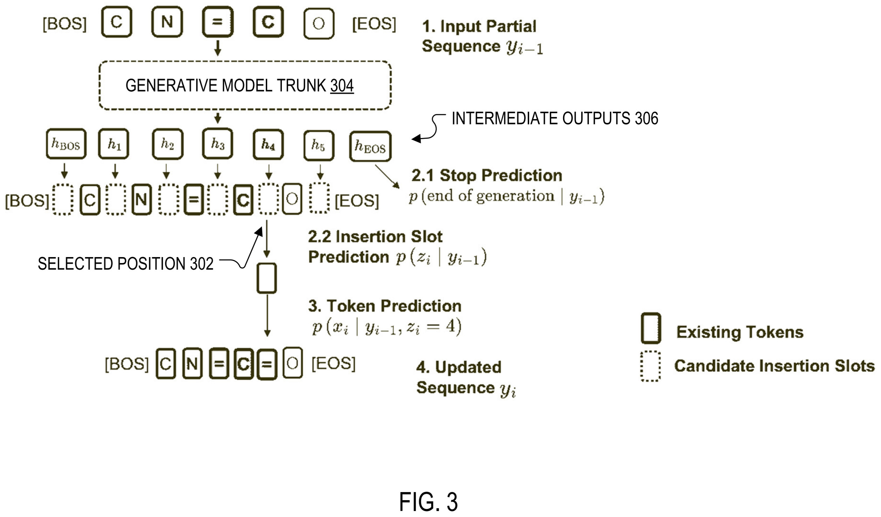

FIG. 3 illustrates generating an output sequence by generating and inserting elements of the output sequence following an ordering determined using an uncertainty scoring neural network. In particular, FIG. 3 illustrates an *i*-th iteration of generating the output sequence by generating and inserting network outputs within the output sequence.

As illustrated in FIG. 3, the output sequence can include *i* - 1 previously generated elements at the start of the i-th iteration and can have *i* candidate positions (e.g., "insertion slots") where new network outputs can be inserted among the previously generated elements to update the output sequence during the *i*-th iteration of generating the output sequence. As described above with reference to FIG. 1, a sequence generation system (e.g., the sequence generation system 100 of FIG. 1) can use an uncertainty scoring neural network to generate uncertainty scores for each of the candidate positions for inserting new elements within the output sequence during the *i*-th iteration of generating the output sequence. The uncertainty scoring neural network can also generate an additional (e.g., an *i* + 1 -th) uncertainty score for terminating the generation of the output sequence.

The sequence generation system can use the additional uncertainty score to determine whether to terminate the generation of the output sequence or to proceed with generating the output sequence by inserting generated network outputs within the output sequence. When the sequence generation system proceeds with generating elements to include within the output sequence during an iteration, the sequence generation system can use the uncertainty scores to select positions to insert the new elements within the output sequence during the iteration. For example, as illustrated in FIG. 3, the sequence generation system can use the uncertainty scores to determine a selected position 302 (e.g., a selected insertion slot) to insert a new network output within the output sequence during the *i*-th iteration of generating the output sequence.

The sequence generation system can then generate outputs for each of the selected positions (e.g., selected insertion slots) of the output sequence using a generative model.

For example, as illustrated in FIG. 3, the output sequence can include previously generated elements representing a string "CN=CO" and the sequence generation system can generate and insert a new element to update the output sequence represent the string "CN=C=O".

As described above with reference to FIG. 1, the generative model and the uncertainty scoring neural network can include a shared "trunk" of one or more shared processing layers 304. For example, as illustrated in FIG. 3, the sequence generation system can process the current output sequence at each iteration using the shared processing layers 304 of the generative model and the uncertainty scoring neural network to generate intermediate outputs 306 for each of the candidate positions for the iteration. The uncertainty scoring neural network can be configured to process the intermediate outputs 304 generated by the shared processing layers 304 to generate the uncertainty scores for the candidate positions, e.g., by processing the intermediate outputs 306 using a "head" of one or more processing layers specific to the uncertainty scoring neural network. Similarly, the generative model can be configured to process the intermediate outputs 306 generated by the shared processing layers 304 to generate the network outputs for the selected positions, e.g., by processing the intermediate outputs 304 using a "head" of one or more processing layers specific to the generative model.

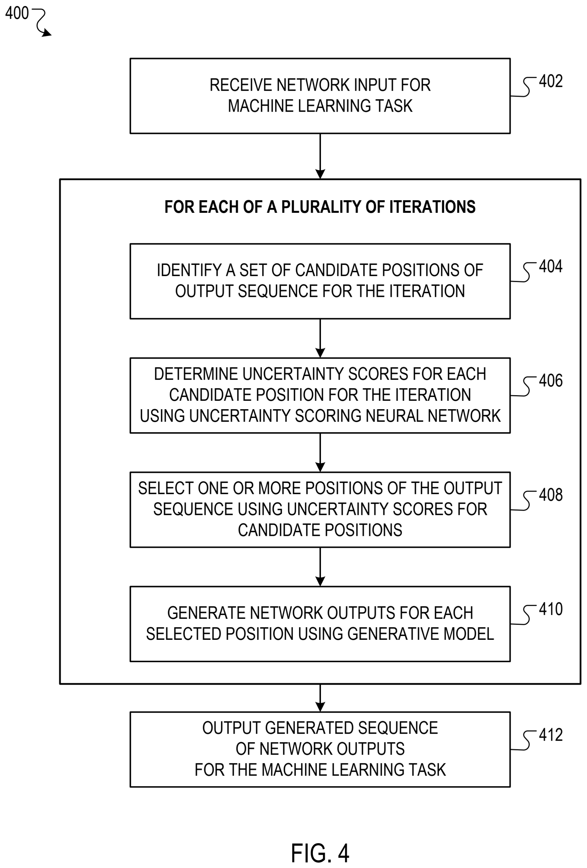

An example process by which the sequence generation system can iteratively generate outputs to include within the output sequence is described in more detail below with reference to FIG. 4.

FIG. 4 is a flow diagram of an example process 400 for generating a sequence of network outputs for a machine learning task following an ordering determined using an uncertainty scoring neural network. For convenience, the process 400 will be described as being performed by a system of one or more computers located in one or more locations. For example, a sequence generation system, e.g., the sequence generation system 100 of FIG. 1, appropriately programmed in accordance with this specification, can perform the process 400.

The system can receive a network input for the machine learning task (step 402). As described above, the network can include input data of any appropriate input data modality for the machine learning task. The network input can include, e.g., text data, image data, audio data, video data, time series data, structured numerical data, molecule data characterizing a spatial and/or chemical structure of a molecule (e.g. a property such as LogP < 5 or Target: Kinase; or a chemical formula constraint), or any combination thereof. In some implementations, the network input can be an input token sequence representing input data for the machine learning task.

The system can receive the network input for the machine learning task by any appropriate means. For example, in some implementations, the system can receive the network input for the machine learning task from a user (e.g., by means of a user interface of the system). As another example, in some implementations, the system can receive the network input for the machine learning task from another system (e.g., by means of an application programming interface of the system).

The system can then generate the sequence of network outputs for the task using a generative model over a plurality of iterations. As described in more detail below with reference to FIG. 6, the uncertainty scoring neural network and the generative model can be jointly trained (e.g., using training examples for the machine learning task) to generate the sequence of network outputs using the generative model following an ordering of network outputs determined using the uncertainty scoring network. At each iteration of generating the sequence of network outputs, the system can perform the steps 404-410 described below.

The system can identify a set of candidate positions of the sequence of network outputs for the iteration (step 404). In particular, at each iteration, the system can identify each position of the sequence of network outputs that does not have a generated network output as of the iteration as a candidate position for the iteration.

For example, in some implementations, the system can generate the sequence of network outputs by iteratively unmasking elements to include within the sequence of network outputs. When the system unmasks elements to include within the sequence of network outputs, the set of candidate positions at each iteration can be the set of positions of each masked element within a sequence of elements representing the sequence of network outputs as of the iteration (e.g., the set of positions of the output sequence that do not have generated network outputs as of the iteration).

As another example, in some implementations, the system can generate the sequence of network outputs by iteratively inserting elements within the sequence of network outputs. When the system inserts elements within the sequence of network outputs, the set of candidate positions at each iteration can be a set of insertion positions (e.g., insertion slots) within the sequence of network outputs as of the iteration. The set of candidate positions for a sequence of $N$ network outputs can include $N+1$ insertion positions, including a respective insertion positions for inserting a network output within the sequence of network outputs generated during the iteration as a new first element of the sequence, as a new last element of the sequence, or between two previously generated elements of the sequence.

The system can determine a respective uncertainty score for each of the set of candidate positions for the iteration using the uncertainty scoring neural network (step 406). As described above with reference to FIG. 1, the system can generate the uncertainty scores for the candidate positions for the iteration by processing data characterizing (i) the network input for the machine learning task and (ii) the network outputs at any positions of the sequence of network outputs that have a generated network output as of the iteration using the uncertainty scoring neural network. In some implementations, the model input to the uncertainty scoring neural network can include data characterizing the positions of the previously generated network outputs as of the iteration.

As an example, when the system iteratively unmasks elements of the sequence of network outputs, the uncertainty scoring neural network can be configured to generate the uncertainty scores for each iteration by processing a model input for the iteration that includes (i) the network input for the machine learning task and (ii) a masked sequence of elements that represents the output sequence as of the iteration. The masked sequence of elements can include a respective masked element for each position of the output sequence that does not have a generated network output as of the iteration and can include the generated network outputs for any positions of the output sequence that have generated network outputs as of the iteration.

As another example, when the system iteratively inserts elements within the sequence of network outputs, the uncertainty scoring neural network can be configured to generate the uncertainty scores for each iteration by processing a model input for the iteration that includes (i) the network input for the machine learning task and (ii) a sequence of elements that represents any previously generated elements of the output sequence as of the iteration. As described above with reference to FIG. 3, when the system iteratively inserts elements within the sequence of network outputs, the uncertainty scoring neural network can be configured to generate an additional uncertainty score for use in determining whether to terminate generating the output sequence. In particular, for a sequence of network outputs that includes $N$ network outputs as of the iteration, the uncertainty scoring neural network can be configured to generate $N+2$ separate uncertainty scores (e.g., including a respective uncertainty score for each of the $N+1$ candidate insertion positions for the iteration and the additional uncertainty score for use in determining whether to terminate generating the sequence of network outputs).

In some implementations, the uncertainty scoring neural network can be configured to process a same model input for each iteration as the generative model. For example, in some implementations, the uncertainty scoring neural network and the generative model can include one or more shared processing layers (e.g., the uncertainty scoring neural network can include one or more processing layers from the generative model). When the uncertainty scoring neural network shares one or more processing layers with the generative model, the uncertainty scoring neural network can process the model input at each iteration using the one or more shared processing layers and can generate the uncertainty scores for the iteration by processing the resulting output from the one or more shared processing layers.

For example, as part of generating the uncertainty scores for the iteration, the system can process the model input to the uncertainty scoring neural network using the one or more shared processing layers from the generative model to generate data characterizing a respective distribution of network outputs for each of the set of candidate positions for the iteration. In some implementations, the uncertainty scoring neural network can then process the data characterizing the distributions of network outputs for the candidate positions to determine the uncertainty score for each candidate position as an entropy of the distribution of network outputs for the candidate position. As another example, in some implementations, the uncertainty scoring neural network can include one or more processing layers that are not included within the generative model and can process the data characterizing the distributions of network outputs for each of the set of candidate positions for the iteration using the one or more processing layers that are not included within the generative model to generate the uncertainty scores for each of the set of candidate positions for the iteration.

The system can select one or more positions of the sequence of network outputs from the set of candidate positions for the iteration using the uncertainty scores for the candidate positions for the iteration (step 408). In some implementations, at one or more iterations, the system can select a plurality of positions for the iteration using the uncertainty scores for the candidate positions for the iteration.

The system can determine the selected positions for each iteration by any of a variety of methods. For example, in some implementations, the system can use a selection criteria to determine the selected positions based on the uncertainty scores for the candidate positions, such as by determining the selected positions to be the one or more candidate positions of the output sequence that have, e.g., the smallest uncertainty scores as generated by the uncertainty scoring neural network, the largest uncertainty scores as generated by the uncertainty scoring neural network, and so on. As another example, in some implementations, the system can determine the selected positions by sampling the selected positions from a distribution determined using the uncertainty scores for the candidate positions. An example process by which the system can sample the selected positions from a distribution determined using uncertainty scores for the candidate positions is described in more detail below with reference to FIG. 5.

As described above, when the system iteratively inserts elements within the sequence of network outputs, the system can, in addition to generating the uncertainty scores for each of the candidate positions for the iteration, generate an additional uncertainty score for use in determining whether to terminate generating the sequence of network outputs.

Prior to or as part of determining the selected positions for the iteration, the system can determine whether to terminate generating the sequence of network outputs using the additional uncertainty score by any of a variety of methods. For example, in some implementations, the system can decide to terminate generating the sequence of network outputs when the additional uncertainty score satisfies a pre-determined criteria, e.g., when the additional uncertainty score is greater than a pre-determined threshold, when the additional uncertainty score is smaller than a pre-determined threshold, and so on. As another example, in some implementations, the system can decide to terminate generating the sequence of network outputs when the uncertainty scores for the iteration satisfy a termination criteria, such as when the additional uncertainty score, e.g., is the smallest uncertainty score generated by the uncertainty scoring neural network, is the largest uncertainty score generated by uncertainty scoring neural network, and so on. As another example, in some implementations, the system can decide to terminate generating the sequence of network outputs with a probability determined using the additional uncertainty score.

As another example, in some implementations, the system can decide whether to terminate generating the sequence of network outputs system as part of sampling the selected positions for the iteration by treating a decision to terminate as an additional candidate position that the system can sample (e.g., following the process 500 of FIG. 5). In particular, the system can decide whether to terminate generating the sequence of network outputs system as part of sampling the selected positions for the iteration, e.g., by sampling elements from a distribution (e.g., determined using the uncertainty scores for the iteration) over a set of elements that includes (i) a respective element representing each of the candidate positions for the iteration and (ii) an element representing a decision to terminate generating the sequence of network outputs. The system can therefore decide to terminate generating the sequence of network outputs during an iteration when the system samples the element representing the decision to terminate as part of sampling the selected positions for the iteration.

The system can terminate generating the sequence of network outputs during an iteration by outputting the current sequence of network outputs without generating additional elements to include within the output sequence (e.g., skipping to step 412). Otherwise, the system can continue to generate one or more elements (e.g., by continuing to step 410).

The system can generate a respective network output at each of the selected positions of the sequence of network outputs for the position using the generative model (step 410).

As described above with reference to FIG. 1, the generative model can generate the network outputs for the selected positions of the output sequence for the iteration by processing a model input that includes (i) the network input for the machine learning task and (ii) the network outputs at any positions of the sequence of network outputs that have a generated network output as of the iteration. As an example, the generative model can be configured to generate the network outputs for each iteration by processing a model input for the iteration that includes (i) the network input for the machine learning task and (ii) a masked sequence of elements that represents the output sequence as of the iteration. As another example, the generative model can be an insertion model configured to generate network outputs to insert within the sequence of network outputs by processing a model input for the iteration that includes (i) the network input for the machine learning task and (ii) a sequence of elements that represents any previously generated elements of the output sequence as of the iteration.

The generative model can be configured to generate network outputs that include output data of any appropriate output data modality for the machine learning task. The network outputs can include, e.g., text data, image data, audio data, video data, time series data, structured numerical data, molecule data characterizing a spatial and/or chemical structure of a molecule, or any combination thereof. In some implementations, the network outputs can be tokens of an output token sequence representing output data for the machine learning task.

In some implementations, the generative model can be configured to process a same model input as the uncertainty scoring neural network.

In general, the generative model can be configured to generate the network output for each selected position by (i) determining distribution across a space of possible network outputs for the selected position by processing the model input to the generative machine learning model and (ii) sampling the network output for the selected position in accordance with the determined distribution of possible outputs for the selected position. When the system generates network outputs for multiple selected positions during an iteration, the system can use the generative model to generate the multiple network outputs for the iteration by any of a variety of methods. For example, in some implementations, the system can process the model input to the generative machine learning model to separately (e.g., in parallel) generate the network outputs for each of the selected positions for the iteration. As another example, in some implementations, the system can process the model input to the generative machine learning model to jointly generate the network outputs for each of the selected positions for the iteration.

After generating the network outputs for the selected positions for the output sequence, the system can update the output sequence to include the generated network outputs. For example, when the system iteratively unmasks elements of the sequence of network outputs, the system can update the masked sequence by unmasking elements using the network outputs generated by the generative model during the iteration (e.g., by replacing masked elements of the masked sequence with corresponding network outputs generated by the generative model during the iteration). As another example, when the system iteratively inserts elements within the sequence of network outputs, the system can update the output sequence by inserting network outputs generated by the generative model within the output sequence. The system can insert a network output within the output sequence by including the network output as an additional element of the output sequence, e.g., as a last element of the output sequence, as a first element of the output sequence, or between two previously generated elements of the output sequence)

After a final iteration of generating the sequence of network outputs, the system can output the generated sequence of network outputs (step 412). The system can output the generated sequence of network outputs by any appropriate method. For example, in some implementations, the system can provide the generated sequence of network outputs to a user (e.g., by means of a user interface of the system). As another example, in some implementations, the system can output the generated sequence of network outputs to another system (e.g., by means of an application programming interface of the other system).

FIG. 5 is a flow diagram of an example process 500 for sampling positions for generating an output sequence using uncertainty scores determined using an uncertainty scoring neural network. For convenience, the process 500 will be described as being performed by a system of one or more computers located in one or more locations. For example, a sequence generation system, e.g., the sequence generation system 100 of FIG. 1, appropriately programmed in accordance with this specification, can perform the process 500.

The system can process a model input to the uncertainty scoring neural network to generate uncertainty scores for each of a set of candidate positions of the output sequence (step 502). As described above with reference to FIG. 4, for an iteration of generating an output sequence for a machine learning task, the model input to the uncertainty scoring neural network can include data characterizing (i) a network input for the machine learning task and (ii) the network outputs at any positions of the output sequence that have a previously generated network output as of the iteration.

As an example, when generating an *i*-th output for the output sequence (e.g., after having generated *i-1* previous network outputs for the output sequence), the system can use the uncertainty scoring neural network to determine an uncertainty score, $u(z_i)$, for each candidate position, $z_i$, for the i-th output within the output sequence following:

$$u(z_i) = f_\theta\big(\boldsymbol{z}_{<i}, x_{\boldsymbol{z}_{<i}}; x_0\big)$$

where $\boldsymbol{z}_{<i}$ are the selected positions of the previously generated outputs within the output sequence, $x_{\boldsymbol{z}_{<i}}$ are the previously generated outputs within the output sequence, $x_0$ is the network input for the machine learning task, and $f_\theta$ is a function parameterized by the uncertainty scoring neural network.

When the system unmasks elements of the sequence of network outputs, the candidate position, $z_i$, for the *i*-th output can be a position of a masked element of the sequence of network outputs replaced by the *i*-th output while generating the sequence of network outputs. When the system iteratively inserts elements within the sequence of network outputs, the candidate position, $z_i$, for the *i*-th output can be an insertion position (e.g., an insertion slot) for the *i*-th output when updating the sequence of network outputs to include the *i*-th output.

As described above, the uncertainty scoring neural network can share one or more processing layers of a generative model used to generate the output sequence. In particular, the shared processing layers of the uncertainty scoring neural network and the generative model can be configured to process the data characterizing (i) the network input for the machine learning task and (ii) the network outputs at any positions of the output sequence that have a previously generated network output as of the iteration to generate data characterizing a respective distribution of outputs, $p_\theta (x_{z_i}|x_{\boldsymbol{z}_{<i}}; x_0)$ for each candidate position, $z_i$.

When the uncertainty scoring neural network shares processing layers with the generative model, the uncertainty scoring neural network can process the outputs of the shared processing layers to generate the uncertainty scores for the candidate positions by any of a variety of methods.

For example, in some implementations, the uncertainty scoring neural network can generate the uncertainty score for each candidate position, $z_i$, by processing the output of the shared processing layers using one or more processing layers that are not included within the generative model, e.g., following:

$$u(z_i) = h_{\theta,z_i}\Big(g_\theta\big(x_{\boldsymbol{z}_{<i}}; x_0\big)\Big)$$

where $h_{\theta,z_i}(g_\theta(x_{\boldsymbol{z}_{<i}}; x_0))$ is an output associated with the candidate position, $z_i$, generated by the processing layers that are not included within the generative model processing output of the shared processing layers, $g_\theta (x_{\boldsymbol{z}_{<i}}; x_0)$.

As another example, in some implementations, the uncertainty scoring neural network can generate the uncertainty score for each candidate position, $z_i$, as an entropy of the distribution for the candidate position, $z_i$, characterized by the outputs of the shared processing layers, e.g., following:

$$u(z_i) = \mathcal{H}\Big(p_\theta\big(x_{z_i}\big|\boldsymbol{x}_{\boldsymbol{z}_{<i}}; x_0\big)\Big)$$

The system can determine a probability distribution for sampling over the set of candidate positions for the iteration defined by the uncertainty scores the candidate positions for the iteration (step 504). The system can determine the probability distribution over the set of candidate positions as any appropriate probability distribution parameterized by the uncertainty scores for the candidate positions.

For example, the system can determine the probability distribution, $p_\theta (z_i|z_{<i}, x_{z_{<i}}; x_0)$, for sampling a selected position $z_i$ for generating the i-th output for the output sequence following:

$$p_\theta\big(z_i = k\big|\boldsymbol{z}_{<i}, \boldsymbol{x}_{\boldsymbol{z}_{<i}}; x_0\big) = \frac{e^{\beta u(k)}}{\sum_{j \in z_{\geq i}} e^{\beta u(j)}}$$

where $\beta$ is a scaling coefficient and $z_{\geq i}$ is the set of all candidate positions for the iteration.

As a further example, when the uncertainty scoring neural network generates the uncertainty score for the candidate positions by processing the output of the shared processing layers using one or more processing layers that are not included within the generative model, the system can determine the probability distribution, $p_\theta$ ($z_i|z_{<i}$, $x_{z_{<i}}$; $x_0$), for sampling a selected position $z_i$ for generating the i-th output for the output sequence following:

$$p_\theta\left(z_i = k \mid \boldsymbol{z}_{<i}, \boldsymbol{x}_{\boldsymbol{z}_{<i}}; x_0\right) = \frac{e^{h_{\theta,k}\left(g_\theta\left(x_{\boldsymbol{z}_{<i}}; x_0\right)\right)}}{\sum_{j\in z_{\geq i}} e^{h_{\theta,j}\left(g_\theta\left(x_{\boldsymbol{z}_{<i}}; x_0\right)\right)}}$$

As another example, when the uncertainty scoring neural network can generates the uncertainty score for the candidate positions as entropies of the distributions for the candidate positions determined by the outputs of the shared processing layers, the system can determine the probability distribution, $p_\theta$ ($z_i|z_{<i}$, $x_{z_{<i}}$; $x_0$), for sampling a selected position $z_i$ for generating the i-th output for the output sequence following:

$$p_\theta\left(z_i = k \mid \boldsymbol{z}_{<i}, \boldsymbol{x}_{\boldsymbol{z}_{<i}}; x_0\right) = \frac{e^{-\beta\mathcal{H}\left(p_\theta\left(x_k\middle|\boldsymbol{x}_{\boldsymbol{z}_{<i}}; x_0\right)\right)}}{\sum_{j\in z_{\geq i}} e^{-\beta\mathcal{H}\left(p_\theta\left(x_j\middle|\boldsymbol{x}_{\boldsymbol{z}_{<i}}; x_0\right)\right)}}$$

where $\beta \geq 0$.

The system can then sample one or more selected positions of the sequence of network outputs from the set of candidate positions for the iteration in accordance with the probability distribution for sampling over the set of candidate positions for the iteration (step 506). After sampling the selected positions, the system can generate network outputs for the selected positions, e.g., following step 410 described above with reference to FIG. 4.

In implementations in which the sequence of network outputs characterizes a spatial structure of a molecule, the generative model and the uncertainty scoring neural network can be trained using datasets characterizing chemical compounds, e.g. including drug-like molecules. For example, the training data can include the QM9 dataset (Ramakrishnan et al. "Quantum chemistry structures and properties of 134 kilo molecules", Scientific Data, 1, 150022), which includes around 134,000 small organic molecules (e.g., with up to 9 heavy atoms such as C, O, N, and F) to train the model to generate stable molecular structures. Also or instead , the training data can include the ZINC260k dataset (Dwivedi et al., 2023; Xu et al., 2019), which includes a set of around 260,000 commercially available, drug-like chemical compounds selected to have specific properties suited for drug discovery (typically with more heavy atoms). Also or instead the training data can include data from the GuacaMol dataset (Brown et al. "GuacaMol: Benchmarking Models for de Novo Molecular Design." Journal of Chemical Information and Modeling, 59(3), 1096-1108), which includes drug-like molecules.

FIG. 6 is a flow diagram of an example process 600 for jointly training a generative model and an uncertainty scoring neural network to generating output sequences for a machine learning task following orderings determined using an uncertainty scoring neural network. For convenience, the process 600 will be described as being performed by a system of one or more computers located in one or more locations. For example, a sequence generation system, e.g., the sequence generation system 100 of FIG. 1, appropriately programmed in accordance with this specification, can perform the process 600.

The system can obtain training data for the machine learning task that includes a plurality of training examples (step 602). Each training example can include a respective example model input for the machine learning task and a respective example sequence of network outputs for the machine learning task.

The system can jointly train the generative model and the uncertainty scoring neural network over a sequence of training iterations. As part of training the generative model and the uncertainty scoring neural network, the system can perform steps 604 through 608 at each training iteration.

The system can generate example orderings for generating the example network outputs for each of one or more training examples for the training iteration (step 604). The system can generate the example orderings for the example sequences by any of a variety of methods. For example, in some implementations, the system can sample the example orderings from a distribution of example orderings. As another example, in some implementations, the system can jointly train the generative model and the uncertainty scoring neural network with a posterior neural network and can use the posterior neural network to generate the example orderings for the training examples.

The posterior neural network can be configured to process a sequence of network outputs to generate a prediction of an order in which the generative model generated the network outputs in the sequence.

For example, to determine an i-th position within an ordering of an example output sequence, $x$, the posterior neural network can be configured to process data characterizing the example output sequence, $x$, and sequence of the $i$ - 1 previous positions within the ordering for the output sequence, $z_{<i}$, to generate data characterizing a (posterior) distribution for the *i*-th position within the ordering, $z_i$, following:

$$q_\theta(z_i \mid \boldsymbol{z}_{<i}, \boldsymbol{x}; x_0)$$

The posterior neural network can generally have any appropriate neural network architecture for processing the example output sequences to generate data characterizing posterior distributions for the example orderings of the output sequences. In particular, the posterior neural network can include any of a variety of processing layers (e.g., feedforward layers, convolutional layers, recurrent layers, attention layers, graph processing layers, etc.) in any appropriate combination for processing the example output sequences to generate data characterizing posterior distributions for the example orderings of the output sequences.

In some implementations, the posterior neural network can share one or more processing layers with the generative model. For example, the posterior neural network can share one or more input layers with the generative model.

In some implementations, the posterior neural network can generate a respective urgency score each example output within an example output sequence. For example, the posterior neural network, $h_\theta$, can generate the urgency score, $\phi_j$, for a *j*-th output of an example output sequence, x, following:

$$\phi_j = h_{\theta,j}(\boldsymbol{x}; x_0)$$

The system can determine a joint distribution for the ordering, $j_1 \ldots j_N$, of the example sequence as a Placket-Luce distribution for the ordering parameterized by the urgency scores for the outputs of the example output sequence, following:

$$q_\theta(j_1 \ldots j_N \mid \boldsymbol{x}; x_0) = \prod_{k=1}^{N} \frac{exp\, \phi_{j_k}}{\sum_{l=k}^{N} exp\, \phi_{j_l}}$$

The system can then sample an ordering of the outputs of the joint distribution, $j_1 \ldots j_N \sim q_\theta(j_1 \ldots j_N \mid \boldsymbol{x}; x_0)$, e.g. using the Gumbel Top-k sampling technique described by Kool et. al in "Stochastic Beams and Where to Find Them: The Gumbel-Top-k Trick for Sampling Sequences Without Replacement," International Conference on Machine Learning, PMLR, 2019.

The system can then determine the example ordering for generating positions of the example sequence, $z_1 \ldots z_N$, using the sampled ordering of the outputs of the example sequence, $j_1 \ldots j_N$. For example, when the system generates output sequences by unmasking elements of the output sequences, the system can determine the example ordering for generating positions of the example sequence, $z_1 \ldots z_N$, to be the sampled ordering of the outputs of the joint distribution, $j_1 \ldots j_N$ (e.g., $z_1 \ldots z_N = j_1 \ldots j_N$). As another example, when the system generates output sequences by iteratively inserting elements within the output sequences, the system can determine the example ordering of insertion positions, $z_1 \ldots z_N$, for iteratively inserting elements to generate the example sequence to be an ordering of the insertion positions that is uniquely specified by the sampled ordering for outputs of the outputs of the example sequence, $j_1 \ldots j_N$.

The system can update the generative model and the uncertainty scoring neural network to optimize a joint objective function that measures a likelihood of the generative machine learning model and the uncertainty scoring neural network generating the example output sequences for the training iteration following the determined orderings (step 606). In particular, the system can update parameters of the generative model to optimize the joint objective function.

When the system jointly trains the generative model and the uncertainty scoring neural network with a posterior neural network, the system can also update parameters of the posterior neural network to optimize the joint objective function.

In some implementations, the system can jointly train the generative model and the uncertainty scoring neural network using variational inference, and the joint objective function can be an appropriate objective function for performing variational inference. For example, the joint objective function can measure an evidence lower bound (ELBO) for the likelihood of the generative machine learning model generating the example output sequences for the training iteration following orderings of the example output sequences determined using the uncertainty scoring neural network. The ELBO can characterize (e.g. depend on or be determined based on) a likelihood of the generative model generating the network outputs for an example sequence relative to a posterior likelihood of the example. The objective function can also include a first regularization term as previously described.

When the system trains the generative model and the uncertainty scoring neural network using variational inference, the system can use the orderings for generating the network outputs of the output sequences for the machine learning task (e.g., as determined using the uncertainty scoring neural network) as latent variables of the variational inference.

The joint objective function for the generative model and the uncertainty scoring neural network can include an evidence lower bound for the example sequences for the training iteration that estimates, for each example sequence of network outputs, a likelihood of the generative model generating the example sequence following an ordering of the network outputs determined using the uncertainty scoring network. The evidence lower bound for the example sequences can measure, for each of the one or more example orderings of the network outputs for the example sequence, a ratio between (i) a likelihood of the generative model generating the network outputs for the example sequence following the example ordering for the example sequence and (ii) a posterior likelihood of the example ordering for the example sequence given the network outputs for the example sequence.

For example, for each example ordering, $z = \{z_1, \dots, z_L\}$, of each example output sequence, $x = \{x_1, \dots, x_L\}$, the objective function can measure the loss:

$$\mathcal{L}(x, z) = \sum_{i=1}^{L} \left[ \sum_{z_i \in z_{\geq i}} q_\theta(z_i \mid z_{<i}, x; x_0) \, \log \frac{p_\theta(z_i \mid z_{<i}, x_{z_{<i}}; x_0) \, p_\theta(x_{z_i} \mid x_{z_{<i}}; x_0)}{q_\theta(z_i \mid z_{<i}, x; x_0)} \right]$$

where $p_\theta(x_{z_i} \mid x_{z_{<i}}; x_0)$ denotes the likelihood of the generative model generating the element $x_{z_i}$ of the example sequence (e.g., as an $i$-th output for the training example given the network input, $x_0$, and given the preceding $i - 1$ outputs of the example sequence, $x_{z_{<i}}$, following the example ordering $z$ for the training example), $p_\theta(z_i \mid z_{<i}, x_{z_{<i}}; x_0)$ denotes the likelihood of selecting position $z_i$ of the example output sequence as an i-th output for the training example using the uncertainty scoring neural network, and $q_\theta(z_i \mid z_{<i}, x; x_0)$ denotes the (posterior) likelihood of selecting position $z_i$ of the example output sequence as an i-th output for the training example using the posterior neural network.

When the system generates the example orderings for the training examples using the posterior neural network, the joint objective function can therefore measure an evidence lower bound for each example output sequence, $x$, following:

$$ELBO(x) = \sum_{i=1}^{L} \mathbb{E}_{z_{<i} \sim q_\theta} \left[ \sum_{z_i \in z_{\geq i}} q_\theta(z_i \mid z_{<i}, x; x_0) \, \log \frac{p_\theta(z_i \mid z_{<i}, x_{z_{<i}}; x_0) \, p_\theta(x_{z_i} \mid x_{z_{<i}}; x_0)}{q_\theta(z_i \mid z_{<i}, x; x_0)} \right]$$

In some cases, to reduce a computational cost of evaluating the joint objective function, the system can jointly training the uncertainty scoring neural network and the generative model to optimize an unbiased estimate of the joint objective function for the example sequences. For each example output sequence, the unbiased estimate of the objective function for the example sequences can measure, for a particular iteration for the example sequence and for each of one or more example orderings of the network outputs for the example sequence, a ratio between (i) a likelihood of the generative model generating, at the particular iteration and following an ordering of the network outputs determined using the uncertainty scoring network, a network output of the example sequence at a position in the example sequence for the particular iteration determined by the example ordering for the example sequence and (ii) a posterior likelihood of selecting, at the particular iteration, the position in the example sequence for the particular iteration determined by the example ordering for the example sequence given the network outputs.

As an example, the system can sample a particular iteration, c, for the example ordering, $z = \{z_1, \dots, z_L\}$, for the example output sequence, $x = \{x_1, \dots, x_L\}$, and system can determine the unbiased estimate of the objective function following:

$$\hat{\mathcal{L}}(x, z) = L \sum_{z_c \in z_{\geq c}} q_\theta(z_c \mid z_{<c}, x; x_0) \, \log \frac{p_\theta(z_c \mid z_{<c}, x_{z_{<c}}; x_0) \, p_\theta(x_{z_c} \mid x_{z_{<c}}; x_0)}{q_\theta(z_c \mid z_{<c}, x; x_0)}$$

In some implementations, the objective function can measure a weighted combination of the evidence lower bound for the example sequences and a first regularization term that measures a difference between (i) the likelihoods of the generative model generating the network outputs for the example sequences following the example orderings for the example sequences and (ii) the posterior likelihoods of the example orderings for the example sequences given the network outputs for the example sequences. For example, the first regularization term can measure a Kullback-Leibler divergence between (i) the likelihoods of the generative model generating the network outputs for the example sequences following the example orderings for the example sequences and (ii) the posterior likelihoods of the example orderings for the example sequences given the network outputs for the example sequences.

For example, for each example ordering, $z = \{z_1, \ldots, z_L\}$, of each example output sequence, $x = \{x_1, \ldots, x_L\}$, the objective function can measure the loss:

$$\mathcal{L}(x, z) = \sum_{i=1}^{L} \left[ \sum_{z_i \in z_{\geq i}} q_\theta(z_i | z_{<i}, x; x_0) \, log \, \frac{p_\theta(z_i | z_{<i}, x_{z_{<i}}; x_0) \, p_\theta(x_{z_i} | x_{z_{<i}}; x_0)}{q_\theta(z_i | z_{<i}, x; x_0)} \right.$$

$$\left. + (1 - \beta)D_{KL}(q_\theta(z_i | z_{<i}, x; x_0) \, || \, p_\theta(z_i | z_{<i}, x_{z_{<i}}; x_0) \,) \right]$$

$$= \sum_{i=1}^{L} \mathbb{E}_{z_i \sim q_\theta} [log \, p_\theta(z_i | z_{<i}, x_{z_{<i}}; x_0)] - \beta D_{KL}(q_\theta(z_i | z_{<i}, x; x_0) \, || \, p_\theta(z_i | z_{<i}, x_{z_{<i}}; x_0) \,)$$

With $\beta \geq 1$.

When the joint objective function includes the first regularization term, the system can jointly train the uncertainty scoring neural network and the generative model to optimize the objective function using a weighting schedule for the first regularization term that reduces the weight of the first regularization term over the training iterations. For example, the weighting schedule for the first regularization term can begin with $\beta > 1$ at a first training iteration and can reduce $\beta$ over the sequence of training iterations towards $\beta = 1$.

In some implementations, the objective function can measure a weighted combination of the evidence lower bound for the example sequences and a second regularization term that measures an entropy of the posterior likelihoods of the example orderings for the example sequences given the network outputs for the example sequences.

For example, for each example ordering, $z = \{z_1, \ldots, z_L\}$, of each example output sequence, $x = \{x_1, \ldots, x_L\}$, the objective function can measure the loss:

$$\mathcal{L}(x, z) = \sum_{i=1}^{L} \left[ \sum_{z_i \in z_{\geq i}} q_\theta(z_i | z_{<i}, x; x_0) \, log \, \frac{p_\theta(z_i | z_{<i}, x_{z_{<i}}; x_0) \, p_\theta(x_{z_i} | x_{z_{<i}}; x_0)}{q_\theta(z_i | z_{<i}, x; x_0)} \right.$$

$$\left. + \alpha \mathcal{H}(q_\theta(z_i | z_{<i}, x; x_0)) \right]$$

With $\alpha \geq 0$.

When the joint objective function includes the second regularization term, the system can jointly train the uncertainty scoring neural network and the generative model to optimize the objective function using a weighting schedule for the second regularization term that reduces the weight of the second regularization term over the training iterations. For example, the weighting schedule for the second regularization term can begin with $\alpha > 0$ at a first training iteration and can reduce $\alpha$ over the sequence of training iterations towards $\alpha = 0$.

In some implementations, the joint objective function can measure a weighted combination of the evidence lower bound for the example sequences, the first regularization term, and the second regularization term.

For example, for each example ordering, $z = \{z_1, \ldots, z_L\}$, of each example output sequence, $x = \{x_1, \ldots, x_L\}$, the objective function can measure the loss:

$$\mathcal{L}(x, z) = \sum_{i=1}^{L} \mathbb{E}_{z_i \sim q_\theta} [log \, p_\theta(z_i | z_{<i}, x_{z_{<i}}; x_0)] - \beta D_{KL}(q_\theta(z_i | z_{<i}, x; x_0) \, || \, p_\theta(z_i | z_{<i}, x_{z_{<i}}; x_0)$$

$$+ \alpha \mathcal{H}(q_\theta(z_i | z_{<i}, x; x_0)) \,)$$

With $\beta \geq 1$ and $\alpha \geq 0$.

As part of updating the parameters of the generative model and the uncertainty scoring neural network, the system can determine gradients of the joint objective function (e.g., gradients of the joint objective function with respect to the parameters of the generative model and of the uncertainty scoring neural network). The system can update the parameters of the generative model and the parameters of the uncertainty scoring neural network using the gradients of the joint objective function following any appropriate machine learning technique (e.g., following stochastic gradient descent, ADAM, etc.). When the system jointly trains the generative model and the uncertainty scoring neural network with a posterior neural network, the system can also update parameters of the posterior neural network using gradients of the joint objective function (e.g., gradients of the joint objective function with respect to the parameters of the posterior neural network).

As the joint objective function can measure expected losses over distributions of the example orderings for the training examples (e.g., distributions of example orderings as determine using the posterior neural network), the system can utilize any appropriate reinforcement learning technique (e.g., the REINFORCE algorithm, a policy gradient estimation technique, etc.) to determine unbiased gradients of the objective function with respect to the parameters of the generative model, the uncertainty neural network, and the posterior neural network. The reward can be the (log) likelihood of the example ordering.

The system can determine whether training is complete (step 610). The system can use any of a variety of criteria to determine whether the training is complete. For example, the system can determine that training is complete after a pre-determined number of training iterations. As another example, the system can determine that training is complete when a value of the joint objective function falls below a pre-determined threshold value. As another example, the system can determine that training is complete when a difference between values of the joint objective function for the current training iteration and a previous training iteration falls below a pre-determined threshold.

If the system determines that training is not complete, the system can continue to a next training iteration (e.g., return to step 604)

When the system determines that the training is complete, the system can return the trained generative model and the trained uncertainty scoring neural network (step 610). The system can use the trained generative model and the trained uncertainty scoring neural network to perform the machine learning task, e.g., by processing model inputs and generating output sequences for the machine learning task following the process 400 described above with reference to FIG. 4.

FIG. 7 illustrates experimental results 700 and 702 obtained by using an implementation of the sequence generation system described in this specification to perform molecule generation tasks.

The experimental results 700 compare performances of implementations of the methods as described in this specification (labeled as "LO-ARM-ent-sep", "LO-ARM-st-st", and "LO-ARM-st-sep" in FIG. 7) with various conventional methods (labeled as "GDSS", "DiGress", "GraphARM", "CatFlow", and "Uniform-ARM" in FIG. 7) for a molecule generation task. The experimental results 700 are evaluated by training respective generative models to perform the molecule generation task using the QM9 dataset (described by Ramakrishnan et al. in "Quantum chemistry structures and properties of 134 kilo molecules," Scientific Data 1.1 (2014): 1-7) as a training set of example molecules. The results for the implementations of the methods described in this specification included within the experimental results 700 are obtained by training a generative model configured to generate graph data specifying generated molecules using a GraphTransformer architecture (e.g., as described by Vignac et al. in "Digress: Discrete denoising diffusion for graph generation." arXiv preprint arXiv:2209.14734 (2022)) to generate graph nodes representing atoms of the generated molecules and graph edges representing bonds between the atoms of the generated molecules. The experimental results 700 include results for implementations of the methods described utilizing various different implementations of uncertainty scoring neural networks (labeled as "$p_\theta$" in FIG. 7) and variational posterior neural networks (labeled as "$q_\theta$" in FIG. 7). The experimental results 700 include evidence lower bounds (ELBO), validities, uniquenesses, and Frechet ChemNet Distances (FCD) for molecules generated using the compared methods.

The experimental results 702 compare performances of implementations of the methods as described in this specification with and without regularization as described above with reference to FIG. 6 (respectively labeled as "Standard LO-ARM" and "$\alpha$ - $\beta$ LO-ARM in FIG. 7) with various conventional methods (labeled as "DeFoG", "Cometh", "AAE", "VAE", "LSTM AR", "Transformer AR", and "AO-ARM" in FIG. 7) for a molecule generation task. The experimental results 700 are evaluated by training respective generative models to perform the molecule generation task using the GuacaMol dataset (described by Brown et al. "GuacaMol: benchmarking models for de novo molecular design." Journal of chemical information and modeling 59.3 (2019): 1096-1108.) as a training set of SMILES strings for example molecules. The results for the implementations of the methods described in this specification included within the experimental results 702 are obtained by training a Transformer neural network to generate SMILES strings specifying generated molecules. The experimental results 700 include evidence lower bounds (ELBO), validities, uniquenesses, and Frechet ChemNet Distances (FCD) for molecules generated using the compared methods.

This specification uses the term "configured" in connection with systems and computer program components. For a system of one or more computers to be configured to perform particular operations or actions means that the system has installed on it software, firmware, hardware, or a combination of them that in operation cause the system to perform the operations or actions. For one or more computer programs to be configured to perform particular operations or actions means that the one or more programs include instructions that, when executed by data processing apparatus, cause the apparatus to perform the operations or actions.

Embodiments of the subject matter and the functional operations described in this specification can be implemented in digital electronic circuitry, in tangibly-embodied computer software or firmware, in computer hardware, including the structures disclosed in this specification and their structural equivalents, or in combinations of one or more of them. Embodiments of the subject matter described in this specification can be implemented as one or more computer programs, i.e., one or more modules of computer program instructions encoded on a tangible non-transitory storage medium for execution by, or to control the operation of, data processing apparatus. The computer storage medium can be a machine-readable storage device, a machine-readable storage substrate, a random or serial access memory device, or a combination of one or more of them. Alternatively or in addition, the program instructions can be encoded on an artificially-generated propagated signal, e.g., a machine-generated electrical, optical, or electromagnetic signal, that is generated to encode information for transmission to suitable receiver apparatus for execution by a data processing apparatus.

The term "data processing apparatus" refers to data processing hardware and encompasses all kinds of apparatus, devices, and machines for processing data, including by way of example a programmable processor, a computer, or multiple processors or computers. The apparatus can also be, or further include, special purpose logic circuitry, e.g., an FPGA (field programmable gate array) or an ASIC (application-specific integrated circuit). The apparatus can optionally include, in addition to hardware, code that creates an execution environment for computer programs, e.g., code that constitutes processor firmware, a protocol stack, a database management system, an operating system, or a combination of one or more of them.

A computer program, which may also be referred to or described as a program, software, a software application, an app, a module, a software module, a script, or code, can be written in any form of programming language, including compiled or interpreted languages, or declarative or procedural languages; and it can be deployed in any form, including as a stand-alone program or as a module, component, subroutine, or other unit suitable for use in a computing environment. A program may, but need not, correspond to a file in a file system. A program can be stored in a portion of a file that holds other programs or data, e.g., one or more scripts stored in a markup language document, in a single file dedicated to the program in question, or in multiple coordinated files, e.g., files that store one or more modules, sub-programs, or portions of code. A computer program can be deployed to be executed on one computer or on multiple computers that are located at one site or distributed across multiple sites and interconnected by a data communication network.

In this specification the term "engine" is used broadly to refer to a software-based system, subsystem, or process that is programmed to perform one or more specific functions. Generally, an engine will be implemented as one or more software modules or components, installed on one or more computers in one or more locations. In some cases, one or more computers will be dedicated to a particular engine; in other cases, multiple engines can be installed and running on the same computer or computers.

The processes and logic flows described in this specification can be performed by one or more programmable computers executing one or more computer programs to perform functions by operating on input data and generating output. The processes and logic flows can also be performed by special purpose logic circuitry, e.g., an FPGA or an ASIC, or by a combination of special purpose logic circuitry and one or more programmed computers.

Computers suitable for the execution of a computer program can be based on general or special purpose microprocessors or both, or any other kind of central processing unit. Generally, a central processing unit will receive instructions and data from a read-only memory or a random access memory or both. The essential elements of a computer are a central processing unit for performing or executing instructions and one or more memory devices for storing instructions and data. The central processing unit and the memory can be supplemented by, or incorporated in, special purpose logic circuitry. Generally, a computer will also include, or be operatively coupled to receive data from or transfer data to, or both, one or more mass storage devices for storing data, e.g., magnetic, magneto-optical disks, or optical disks. However, a computer need not have such devices. Moreover, a computer can be embedded in another device, e.g., a mobile telephone, a personal digital assistant (PDA), a mobile audio or video player, a game console, a Global Positioning System (GPS) receiver, or a portable storage device, e.g., a universal serial bus (USB) flash drive, to name just a few.

Computer-readable media suitable for storing computer program instructions and data include all forms of non-volatile memory, media and memory devices, including by way of example semiconductor memory devices, e.g., EPROM, EEPROM, and flash memory devices; magnetic disks, e.g., internal hard disks or removable disks; magneto-optical disks; and CD-ROM and DVD-ROM disks.

To provide for interaction with a user, embodiments of the subject matter described in this specification can be implemented on a computer having a display device, e.g., a CRT (cathode ray tube) or LCD (liquid crystal display) monitor, for displaying information to the user and a keyboard and a pointing device, e.g., a mouse or a trackball, by which the user can provide input to the computer. Other kinds of devices can be used to provide for interaction with a user as well; for example, feedback provided to the user can be any form of sensory feedback, e.g., visual feedback, auditory feedback, or tactile feedback; and input from the user can be received in any form, including acoustic, speech, or tactile input. In addition, a computer can interact with a user by sending documents to and receiving documents from a device that is used by the user; for example, by sending web pages to a web browser on a user's device in response to requests received from the web browser. Also, a computer can interact with a user by sending text messages or other forms of message to a personal device, e.g., a smartphone that is running a messaging application, and receiving responsive messages from the user in return.

Data processing apparatus for implementing machine learning models can also include, for example, special-purpose hardware accelerator units for processing common and compute-intensive parts of machine learning training or production, i.e., inference, workloads.

Machine learning models can be implemented and deployed using a machine learning framework, e.g., a TensorFlow framework, or a Jax framework.

Embodiments of the subject matter described in this specification can be implemented in a computing system that includes a back-end component, e.g., as a data server, or that includes a middleware component, e.g., an application server, or that includes a front-end component, e.g., a client computer having a graphical user interface, a web browser, or an app through which a user can interact with an implementation of the subject matter described in this specification, or any combination of one or more such back-end, middleware, or front-end components. The components of the system can be interconnected by any form or medium of digital data communication, e.g., a communication network. Examples of communication networks include a local area network (LAN) and a wide area network (WAN), e.g., the Internet.

The computing system can include clients and servers. A client and server are generally remote from each other and typically interact through a communication network. The relationship of client and server arises by virtue of computer programs running on the respective computers and having a client-server relationship to each other. In some embodiments, a server transmits data, e.g., an HTML page, to a user device, e.g., for purposes of displaying data to and receiving user input from a user interacting with the device, which acts as a client. Data generated at the user device, e.g., a result of the user interaction, can be received at the server from the device.

While this specification contains many specific implementation details, these should not be construed as limitations on the scope of any invention or on the scope of what may be claimed, but rather as descriptions of features that may be specific to particular embodiments of particular inventions. Certain features that are described in this specification in the context of separate embodiments can also be implemented in combination in a single embodiment. Conversely, various features that are described in the context of a single embodiment can also be implemented in multiple embodiments separately or in any suitable subcombination. Moreover, although features may be described above as acting in certain combinations and even initially be claimed as such, one or more features from a claimed combination can in some cases be excised from the combination, and the claimed combination may be directed to a subcombination or variation of a subcombination.

Similarly, while operations are depicted in the drawings and recited in the claims in a particular order, this should not be understood as requiring that such operations be performed in the particular order shown or in sequential order, or that all illustrated operations be performed, to achieve desirable results. In certain circumstances, multitasking and parallel processing may be advantageous. Moreover, the separation of various system modules and components in the embodiments described above should not be understood as requiring such separation in all embodiments, and it should be understood that the described program components and systems can generally be integrated together in a single software product or packaged into multiple software products.

Particular embodiments of the subject matter have been described. Other embodiments are within the scope of the following claims. For example, the actions recited in the claims can be performed in a different order and still achieve desirable results. As one example, the processes depicted in the accompanying figures do not necessarily require the particular order shown, or sequential order, to achieve desirable results. In some cases, multitasking and parallel processing may be advantageous.

Further aspects of the invention are defined in the following clauses:

1. A method performed by one or more computers, comprising:

receiving a network input; and
generating a sequence of network outputs using a generative model, wherein the sequence of network outputs comprises a respective network output at each of a plurality of positions of the sequence of network outputs and wherein the generating comprises, at each of a plurality of iterations:

identifying a set of candidate positions for the iteration that comprises each position of the sequence of network outputs that does not have a generated network output as of the iteration;
determining a respective uncertainty score for each of the set of candidate positions for the iteration by processing, using an uncertainty scoring neural network, the network input and the network outputs at any positions of the sequence of network outputs that have a generated network output as of the iteration;

selecting a position of the sequence of network outputs from the set of candidate positions for the iteration using the uncertainty scores for each of the set of candidate positions for the iteration; and

generating the network output at the selected position of the sequence of network outputs by processing, using the generative model, the network input and the network outputs at any position of the sequence of network outputs that does have a generated network output as of the iteration.

2. The method of clause 1, wherein generating the sequence of network outputs using the generative model comprises, at one or more of the plurality of iterations:

selecting a plurality of positions of the sequence of network outputs from the set of candidate positions for the iteration using the uncertainty scores for each of the set of candidate positions for the iteration; and

generating respective network outputs at the selected positions of the sequence of network outputs by processing, using the generative model, the network input and the network outputs at any position of the sequence of network outputs that does have a generated network output as of the iteration.

3. The method of clause 1 or clause 2, wherein the uncertainty scoring neural network and the generative model have been jointly trained to generate example sequences of network outputs using the generative model following orderings of network outputs determined using the uncertainty scoring network.

4. A method performed by one or more computers, comprising:

obtaining training data comprising a plurality of training examples, wherein each training example comprises a respective example model input and a respective example sequence of network outputs; and

jointly training an uncertainty scoring network and a generative model using the training data, wherein the generative model is configured to process a network input to generate a sequence of network outputs comprising a respective network output at each of a plurality of positions of the sequence of network outputs following orderings of the network outputs determined using the uncertainty scoring network by performing operations comprising, at each of a plurality of iterations:

identifying a set of candidate positions for the iteration that comprises each position of the sequence of network outputs that does not have a generated network output as of the iteration;

determining a respective uncertainty score for each of the set of candidate positions for the iteration by processing, using an uncertainty scoring neural network, the network input and the network outputs at any positions of the sequence of network outputs that have a generated network output as of the iteration;

selecting a position of the sequence of network outputs from the set of candidate positions for the iteration using the uncertainty scores for each of the set of candidate positions for the iteration; and

generating the network output at the selected position of the sequence of network outputs by processing, using the generative model, the network input and the network outputs at any position of the sequence of network outputs that does have a generated network output as of the iteration.

5. The method of clause 3 or clause 4, wherein jointly training the uncertainty scoring neural network and the generative model to generate the example sequences of network outputs comprises:

jointly training the uncertainty scoring neural network and the generative model to generate the example sequences of network outputs using variational inference and using the orderings of the network outputs determined using the uncertainty scoring neural network as latent variables of the variational inference.

6. The method of clause 5, wherein jointly training the uncertainty scoring neural network and the generative model to generate the example sequences of network outputs using variational inference comprises:

jointly training the uncertainty scoring neural network and the generative model with a posterior neural network using variational inference, wherein the posterior neural network is configured to process a sequence of network outputs to generate a prediction of an order in which the generative model generated the network outputs in the sequence.

7. The method of clause 6, wherein the generative model includes one or more neural network layers of the posterior neural network.

8. The method of clause 7, wherein the generative model includes one or more input layers of the posterior neural network.

9. The method of any one of clauses 4-8, wherein jointly training the uncertainty scoring neural network and the generative model to generate the example sequences of network outputs using variational inference comprises:

jointly training the uncertainty scoring neural network and the generative model to optimize an objective function that includes an evidence lower bound for the example sequences, wherein the evidence lower bound for the example sequences for the example sequences characterizes, for each example sequence of network outputs, a likelihood of the generative model generating the example sequence following an ordering of the network outputs determined using the uncertainty scoring network.

10. The method of clause 9, wherein, for each example sequence:

the evidence lower bound for the example sequences characterizes, for each of one or more example orderings of the network outputs for the example sequence, a ratio between (i) a likelihood of the generative model generating the network outputs for the example sequence following the example ordering for the example sequence and (ii) a posterior likelihood of the example ordering for the example sequence given the network outputs for the example sequence.

11. The method of clause 10, when dependent on clause 6, wherein the posterior likelihood of the example ordering for the example sequence given the network outputs for the example sequence characterizes a likelihood of the posterior neural network generating the example ordering for the example sequence by processing the example sequence.

12. The method of clause 10, when dependent on clause 6, wherein jointly training the uncertainty scoring neural network and the generative model to generate the example sequences of network outputs using variational inference further comprises, for each example sequence:

generating the one or more example orderings of the network outputs for the example sequence by processing the example sequence using the posterior neural network.

13. The method of any one of clauses 9-12, wherein jointly training the uncertainty scoring neural network and the generative model to optimize the objective function for the example sequences comprises:

jointly training the uncertainty scoring neural network and the generative model to optimize an unbiased estimate of the objective function for the example sequences.

14. The method of clause 13, wherein:

the unbiased estimate of the objective function comprises an unbiased estimate of the objective function for the example sequences; and

for each example sequence, the unbiased estimate of the objective function for the example sequences characterizes, for a particular iteration for the example sequence and for each of one or more example orderings of the network outputs for the example sequence, a ratio between (i) a likelihood of the generative model generating, at the particular iteration and following an ordering of the network outputs determined using the uncertainty scoring network, a network output of the example sequence at a position in the example sequence for the particular iteration determined by the example ordering for the example sequence and (ii) a posterior likelihood of selecting, at the particular iteration, the position in the example sequence for the particular iteration determined by the example ordering for the example sequence given the network outputs.

15. The method of clause 14, when dependent on clause 6, wherein the posterior likelihood of selecting, at the particular iteration, the position in the example sequence for the particular iteration determined by the example ordering for the example sequence given the network outputs for the example sequence characterizes a likelihood of the posterior neural network generating, at the particular iteration, the position in the example sequence determined by the example ordering for the particular iteration by processing the example sequence.

16. The method of any one of clauses 9-15, wherein jointly training the uncertainty scoring neural network and the generative model to optimize the objective function for the example sequences comprises:

determining gradients of the objective function for the example sequences with respect to parameters of the uncertainty scoring neural network and parameters of the generative model; and

updating the uncertainty scoring neural network and the generative model using the determined gradients of the objective function for the example sequences.

17. The method of clause 16, when dependent on clause 13, wherein determining the gradients of the objective function for the example sequences with respect to the parameters of the uncertainty scoring neural network and the parameters of the generative model comprises:

determining gradients of the unbiased estimate of the objective function for the example sequences with respect to the parameters of the uncertainty scoring neural network and the parameters of the generative model.

18. The method of clause 17, wherein determining the gradients of the unbiased estimate of the objective function for the example sequences with respect to the parameters of the uncertainty scoring neural network and the parameters of the generative model comprises:

determining the gradients of the unbiased estimate of the objective function for the example sequences with respect to the parameters of the uncertainty scoring neural network and the parameters of the generative model using a reinforcement learning technique.

19. The method of any one of clauses 11-18, wherein the objective function comprises a weighted combination of the evidence lower bound for the example sequences and a first regularization term that measures a difference between (i) the likelihoods of the generative model generating the network outputs for the example sequences following the example orderings for the example sequences and (ii) the posterior likelihoods of the example orderings for the example sequences given the network outputs for the example sequences.

20. The method of clause 19, wherein the first regularization term measures a Kullback-Leibler divergence between (i) the likelihoods of the generative model generating the network outputs for the example sequences following the example orderings for the example sequences and (ii) the posterior likelihoods of the example orderings for the example sequences given the network outputs for the example sequences.

21. The method of clause 19 or clause 20, wherein jointly training the uncertainty scoring neural network and the generative model to optimize the objective function comprises:
jointly training the uncertainty scoring neural network and the generative model to optimize the objective function using a weighting schedule for the first regularization term that reduces a weight of the first regularization term over a sequence of one or more training steps.

22. The method of any one of clauses 11-21, wherein the objective function comprises a weighted combination of the evidence lower bound for the example sequences and a second regularization term that measures an entropy of the posterior likelihoods of the example orderings for the example sequences given the network outputs for the example sequences.

23. The method of clause 22, wherein jointly training the uncertainty scoring neural network and the generative model to optimize the objective function comprises:
jointly training the uncertainty scoring neural network and the generative model to optimize the objective function using a weighting schedule for the second regularization term that reduces a weight of the second regularization term over a sequence of one or more training steps.

24. The method of any preceding clause, wherein selecting the position of the sequence of network outputs from the set of candidate positions for the iteration using the uncertainty scores for each of the set of candidate positions for the iteration comprises:

determining a probability distribution for sampling over the set of candidate positions for the iteration defined by the uncertainty scores for each of the set of candidate positions for the iteration; and
selecting a position of the sequence of network outputs from the set of candidate positions for the iteration in accordance with the probability distribution for sampling over the set of candidate positions for the iteration.

25. The method of any preceding clause, wherein:

the uncertainty scoring neural network comprises one or more processing layers from the generative model and one or more processing layers that are not included within the generative model; and
determining the respective uncertainty score for each of the set of candidate positions for the iteration by processing, using the uncertainty scoring neural network, the network input and the network outputs at any positions of the sequence of network outputs that have a generated network output as of the iteration comprises:

processing the network input and the network outputs at any positions of the sequence of network outputs that have a generated network output as of the iteration using the one or more processing layers from the generative model to generate data characterizing a respective distribution of network outputs for each of the set of candidate positions for the iteration; and
processing the data characterizing the distributions of network outputs for each of the set of candidate positions for the iteration using the one or more processing layers that are not included within the generative model to determine the respective uncertainty score for each of the set of candidate positions for the iteration.

26. The method of any one of clauses 1-18, wherein:

the uncertainty scoring neural network comprises one or more processing layers from the generative model; and
determining the respective uncertainty score for each of the set of candidate positions for the iteration by processing, using the uncertainty scoring neural network, the network input and the network outputs at any positions of the sequence of network outputs that have a generated network output as of the iteration comprises:

processing the network input and the network outputs at any positions of the sequence of network outputs that have a generated network output as of the iteration using the one or more processing layers from the generative model to generate data characterizing a respective distribution of network outputs for each of the set of candidate positions for the iteration; and

determining, for each of the set of candidate positions for the iteration, the uncertainty score for the candidate position as an entropy of the distribution of network outputs for the candidate position.

27. The method of clause 25 or clause 26, wherein processing the network input and the network outputs at any positions of the sequence of network outputs that have a generated network output as of the iteration using the one or more processing layers from the generative model to generate data characterizing the respective distribution of network outputs for each of the set of candidate positions for the iteration comprises, for each of the set of candidate positions for the iteration:

processing the network input, the network outputs at any positions of the sequence of network outputs that have a generated network output as of the iteration, and data specifying the candidate position using the one or more processing layers from the generative model to generate data characterizing the respective distribution of network outputs for the candidate position.

28. The method of any preceding clause, wherein, at each iteration of the plurality of iterations:

the network input comprises:

for each position of the sequence of network outputs that does not have a generated network output as of the iteration, a respective masked element representing the network output at the position; and
for any position of the sequence of network outputs that has a generated network output as of the iteration, a respective unmasked element representing the network output at the position; and

generating the network output at the selected position of the sequence of network outputs comprises updating the network input by replacing the masked element representing the network output at the selected position with an unmasked element representing the generated network output at the selected position.

29. The method of any preceding clause, wherein the sequence of network outputs characterizes text data.
30. The method of any preceding clause, wherein the sequence of network outputs characterizes an image.
31. The method of any preceding clause, wherein the sequence of network outputs characterizes audio data.
32. The method of any preceding clause, wherein the sequence of network outputs characterizes a video.
33. The method of any preceding clause, wherein the sequence of network outputs characterizes time series data.
34. The method of any preceding clause, wherein the sequence of network outputs characterizes a spatial structure of a molecule.
35. The method of clause 34, wherein the network input characterizes a chemical composition of the molecule using a data representation comprising:

a molecular graph comprising a node feature vector representing atom types and a dense adjacency matrix representing bond types, wherein the dense adjacency matrix includes imaginary bond states to represent an absence of a bond; or
a linear text sequence comprising a character string that encodes a topological structure of the molecule into a sequence of characters; and

wherein the sequence of network outputs comprises:

when the data representation comprises the molecular graph, a sequence of generated node feature vectors and generated entries for the dense adjacency matrix; or
when the data representation comprises the linear text sequence, a sequence of generated characters or tokens of the character string.

36. The method of clause 34 or 35, wherein the molecule comprises a candidate drug molecule, wherein generating the sequence of network outputs performs a molecule design task for drug discovery, wherein the network input characterizes a chemical composition of the candidate drug molecule, and wherein generating the sequence of network outputs comprises generating the spatial structure of the candidate drug molecule.
37. The method of clause 34 or 35, wherein the molecule comprises a candidate drug molecule, wherein generating the sequence of network outputs comprises performing an infilling task or a data completion task for drug discovery, wherein the network input comprises unmasked elements representing a fixed portion of the candidate drug molecule and masked elements representing a portion of the candidate drug molecule to be generated, and wherein the generative model generates the portion of the candidate drug molecule to be generated following an ordering that prioritizes a certainty of the network outputs.

38. The method of any preceding clause, wherein the sequence of network outputs comprises an output token sequence.

39. The method of any preceding clause, wherein the network input characterizes text data.

40. The method of any preceding clause, wherein the network input characterizes image data.

41. The method of any preceding clause, wherein the network input characterizes audio data.

42. The method of any preceding clause, wherein the network input characterizes video data.

43. The method of any preceding clause, wherein the network input characterizes time series data.

44. The method of any preceding clause, wherein the network input comprises an input token sequence.

45. A system comprising:

one or more computers; and
one or more storage devices communicatively coupled to the one or more computers, wherein the one or more storage devices store instructions that, when executed by the one or more computers, cause the one or more computers to perform the operations of any one of clauses 1-44.

46. One or more non-transitory computer storage media storing instructions that when executed by one or more computers cause the one or more computers to perform the operations of any one of clauses 1-44.

## Claims

1. A method performed by one or more computers, comprising:

receiving a network input; and
generating a sequence of network outputs using a generative model, wherein the sequence of network outputs comprises a respective network output at each of a plurality of positions of the sequence of network outputs and wherein the generating comprises, at each of a plurality of iterations:

identifying a set of candidate positions for the iteration that comprises each position of the sequence of network outputs that does not have a generated network output as of the iteration;
determining a respective uncertainty score for each of the set of candidate positions for the iteration by processing, using an uncertainty scoring neural network, the network input and the network outputs at any positions of the sequence of network outputs that have a generated network output as of the iteration;
selecting a position of the sequence of network outputs from the set of candidate positions for the iteration using the uncertainty scores for each of the set of candidate positions for the iteration; and
generating the network output at the selected position of the sequence of network outputs by processing, using the generative model, the network input and the network outputs at any position of the sequence of network outputs that does have a generated network output as of the iteration.

2. The method of claim 1, wherein generating the sequence of network outputs using the generative model comprises, at one or more of the plurality of iterations:

selecting a plurality of positions of the sequence of network outputs from the set of candidate positions for the iteration using the uncertainty scores for each of the set of candidate positions for the iteration; and
generating respective network outputs at the selected positions of the sequence of network outputs by processing, using the generative model, the network input and the network outputs at any position of the sequence of network outputs that does have a generated network output as of the iteration.

3. The method of claim 1 or claim 2, wherein the uncertainty scoring neural network and the generative model have been jointly trained to generate example sequences of network outputs using the generative model following orderings of network outputs determined using the uncertainty scoring network.

4. A method performed by one or more computers, comprising:

obtaining training data comprising a plurality of training examples, wherein each training example comprises a respective example model input and a respective example sequence of network outputs; and
jointly training an uncertainty scoring network and a generative model using the training data, wherein the generative model is configured to process a network input to generate a sequence of network outputs comprising a respective network output at each of a plurality of positions of the sequence of network outputs following orderings of the network outputs determined using the uncertainty scoring network by performing operations comprising, at each of a plurality of iterations:

identifying a set of candidate positions for the iteration that comprises each position of the sequence of network outputs that does not have a generated network output as of the iteration;
determining a respective uncertainty score for each of the set of candidate positions for the iteration by processing, using an uncertainty scoring neural network, the network input and the network outputs at any positions of the sequence of network outputs that have a generated network output as of the iteration;
selecting a position of the sequence of network outputs from the set of candidate positions for the iteration using the uncertainty scores for each of the set of candidate positions for the iteration; and
generating the network output at the selected position of the sequence of network outputs by processing, using the generative model, the network input and the network outputs at any position of the sequence of network outputs that does have a generated network output as of the iteration.

5. The method of claim 3 or claim 4, wherein jointly training the uncertainty scoring neural network and the generative model to generate the example sequences of network outputs comprises:
jointly training the uncertainty scoring neural network and the generative model to generate the example sequences of network outputs using variational inference and using the orderings of the network outputs determined using the uncertainty scoring neural network as latent variables of the variational inference; in particular

6. The method of claim 5, wherein jointly training the uncertainty scoring neural network and the generative model to generate the example sequences of network outputs using variational inference comprises:
jointly training the uncertainty scoring neural network and the generative model with a posterior neural network using variational inference, wherein the posterior neural network is configured to process a sequence of network outputs to generate a prediction of an order in which the generative model generated the network outputs in the sequence.

7. The method of any one of claims 4-6, wherein jointly training the uncertainty scoring neural network and the generative model to generate the example sequences of network outputs using variational inference comprises:
jointly training the uncertainty scoring neural network and the generative model to optimize an objective function that includes an evidence lower bound for the example sequences, wherein the evidence lower bound for the example sequences for the example sequences characterizes, for each example sequence of network outputs, a likelihood of the generative model generating the example sequence following an ordering of the network outputs determined using the uncertainty scoring network.

8. The method of claim 7, wherein, for each example sequence:
the evidence lower bound for the example sequences characterizes, for each of one or more example orderings of the network outputs for the example sequence, a ratio between (i) a likelihood of the generative model generating the network outputs for the example sequence following the example ordering for the example sequence and (ii) a posterior likelihood of the example ordering for the example sequence given the network outputs for the example sequence.

9. The method of claim 8, when dependent on claim 6,

wherein the posterior likelihood of the example ordering for the example sequence given the network outputs for the example sequence characterizes a likelihood of the posterior neural network generating the example ordering for the example sequence by processing the example sequence; and/or
wherein jointly training the uncertainty scoring neural network and the generative model to generate the example sequences of network outputs using variational inference further comprises, for each example sequence:
generating the one or more example orderings of the network outputs for the example sequence by processing the example sequence using the posterior neural network.

10. The method of any preceding claim, wherein selecting the position of the sequence of network outputs from the set of candidate positions for the iteration using the uncertainty scores for each of the set of candidate positions for the iteration comprises:

determining a probability distribution for sampling over the set of candidate positions for the iteration defined by the uncertainty scores for each of the set of candidate positions for the iteration; and

selecting a position of the sequence of network outputs from the set of candidate positions for the iteration in accordance with the probability distribution for sampling over the set of candidate positions for the iteration.

11. The method of any preceding claim, wherein:

the uncertainty scoring neural network comprises one or more processing layers from the generative model and one or more processing layers that are not included within the generative model; and
determining the respective uncertainty score for each of the set of candidate positions for the iteration by processing, using the uncertainty scoring neural network, the network input and the network outputs at any positions of the sequence of network outputs that have a generated network output as of the iteration comprises:

processing the network input and the network outputs at any positions of the sequence of network outputs that have a generated network output as of the iteration using the one or more processing layers from the generative model to generate data characterizing a respective distribution of network outputs for each of the set of candidate positions for the iteration; and
processing the data characterizing the distributions of network outputs for each of the set of candidate positions for the iteration using the one or more processing layers that are not included within the generative model to determine the respective uncertainty score for each of the set of candidate positions for the iteration;

and/or wherein:

the uncertainty scoring neural network comprises one or more processing layers from the generative model; and
determining the respective uncertainty score for each of the set of candidate positions for the iteration by processing, using the uncertainty scoring neural network, the network input and the network outputs at any positions of the sequence of network outputs that have a generated network output as of the iteration comprises:

processing the network input and the network outputs at any positions of the sequence of network outputs that have a generated network output as of the iteration using the one or more processing layers from the generative model to generate data characterizing a respective distribution of network outputs for each of the set of candidate positions for the iteration; and
determining, for each of the set of candidate positions for the iteration, the uncertainty score for the candidate position as an entropy of the distribution of network outputs for the candidate position.

12. The method of any preceding claim, wherein, at each iteration of the plurality of iterations:

the network input comprises:

for each position of the sequence of network outputs that does not have a generated network output as of the iteration, a respective masked element representing the network output at the position; and
for any position of the sequence of network outputs that has a generated network output as of the iteration, a respective unmasked element representing the network output at the position; and

generating the network output at the selected position of the sequence of network outputs comprises updating the network input by replacing the masked element representing the network output at the selected position with an unmasked element representing the generated network output at the selected position.

13. The method of any preceding claim, wherein the network input characterizes one or more of: text data, image data, audio data, video data, and time series data; and/or

wherein the sequence of network outputs characterizes an image, audio data, a video, or a spatial structure of a molecule such as a candidate drug molecule, in particular
wherein the network input characterizes a chemical composition of the molecule using a data representation comprising:

a molecular graph comprising a node feature vector representing atom types and a dense adjacency matrix representing bond types, wherein the dense adjacency matrix includes imaginary bond states to represent an absence of a bond; or
a linear text sequence comprising a character string that encodes a topological structure of the molecule into a sequence of characters; and

wherein the sequence of network outputs comprises:

when the data representation comprises the molecular graph, a sequence of generated node feature vectors and generated entries for the dense adjacency matrix; or
when the data representation comprises the linear text sequence, a sequence of generated characters or tokens of the character string.

14. A system comprising:

one or more computers; and
one or more storage devices communicatively coupled to the one or more computers,

wherein the one or more storage devices store instructions that, when executed by the one or more computers, cause the one or more computers to perform the operations of any one of claims 1-13.

15. One or more non-transitory computer storage media storing instructions that when executed by one or more computers cause the one or more computers to perform the operations of any one of claims 1-13.

# SEQUENCE GENERATION SYSTEM
## 100

OUTPUT
SEQUENCE
104

NETWORK
OUTPUTS
108

GENERATIVE
MODEL
106

SELECTED
POSITIONS
110

SELECTION
SYSTEM
116

UNCERTAINTY
SCORES
114

UNCERTAINTY
SCORING
NEURAL
NETWORK
112

NETWORK
INPUT
102

FIG. 1

OUTPUT SEQUENCE
202

... ( OUTPUT 204-A ) ( OUTPUT 204-B ) ( OUTPUT 204-C ) ( OUTPUT 204-D ) ( OUTPUT 204-E ) ...

DETERMINE UNCERTAINTY SCORES FOR OUTPUT SEQUENCE USING UNCERTAINTY SCORING NEURAL NETWORK TO SELECT POSITION(S) TO GENERATE DURING ITERATION

... ( OUTPUT 204-A ) ( OUTPUT 204-B ) ( OUTPUT 204-C ) ( OUTPUT 204-D ) ( OUTPUT 204-E ) ...

GENERATE OUTPUT(S) FOR SELECTED POSITION(S) OF THE OUTPUT SEQUENCE

... ( OUTPUT 204-A ) ( OUTPUT 204-B ) ( OUTPUT 204-C ) ( OUTPUT 204-D ) ( OUTPUT 204-E ) ...

FIG. 2

1. **Input Partial Sequence** $y_{i-1}$

GENERATIVE MODEL TRUNK 304

INTERMEDIATE OUTPUTS 306

$h_{BOS}$  $h_1$  $h_2$  $h_3$  $h_4$  $h_5$  $h_{EOS}$

2.1 **Stop Prediction** $p(\text{end of generation} \mid y_{i-1})$

2.2 **Insertion Slot Prediction** $p(z_i \mid y_{i-1})$

SELECTED POSITION 302

3. **Token Prediction** $p(x_i \mid y_{i-1}, z_i = 4)$

4. **Updated Sequence** $y_i$

Existing Tokens

Candidate Insertion Slots

FIG. 3

EP 4 787 232 A1

400

RECEIVE NETWORK INPUT FOR
MACHINE LEARNING TASK $\qquad$ 402

**FOR EACH OF A PLURALITY OF ITERATIONS**

IDENTIFY A SET OF CANDIDATE POSITIONS OF
OUTPUT SEQUENCE FOR THE ITERATION $\qquad$ 404

DETERMINE UNCERTAINTY SCORES FOR EACH
CANDIDATE POSITION FOR THE ITERATION
USING UNCERTAINTY SCORING NEURAL NETWORK $\qquad$ 406

SELECT ONE OR MORE POSITIONS OF THE OUTPUT
SEQUENCE USING UNCERTAINTY SCORES FOR
CANDIDATE POSITIONS $\qquad$ 408

GENERATE NETWORK OUTPUTS FOR EACH
SELECTED POSITION USING GENERATIVE MODEL $\qquad$ 410

OUTPUT GENERATED SEQUENCE
OF NETWORK OUTPUTS
FOR THE MACHINE LEARNING TASK $\qquad$ 412

FIG. 4

500

```
┌─────────────────────────────────────────────────┐
│ GENERATE UNCERTAINTY SCORES FOR A SET OF          │ ⟋ 502
│ CANDIDATE POSITIONS OF OUTPUT SEQUENCE            │
│ USING UNCERTAINTY SCORING NEURAL NETWORK          │
└─────────────────────────────────────────────────┘
                        │
                        ▼
┌─────────────────────────────────────────────────┐
│ DETERMINE PROBABILITY DISTRIBUTION OVER THE       │ ⟋ 504
│ SET OF CANDIDATE POSITIONS DEFINED BY             │
│ THE UNCERTAINTY SCORES                            │
│ FOR THE CANDIDATE POSITIONS                       │
└─────────────────────────────────────────────────┘
                        │
                        ▼
┌─────────────────────────────────────────────────┐
│ SAMPLE ONE OR MORE SELECTED POSITIONS             │ ⟋ 506
│ FROM THE SET OF CANDIDATE POSITIONS IN            │
│ ACCORDANCE WITH THE                               │
│ PROBABILITY DISTRIBUTION OVER THE SET OF          │
│ CANDIDATE POSITIONS                               │
└─────────────────────────────────────────────────┘
```

FIG. 5

600

```
┌─────────────────────────────────────────┐
│  OBTAIN TRAINING EXAMPLES THAT INCLUDE    │ ⟋ 602
│  EXAMPLE NETWORK INPUTS AND EXAMPLE       │
│  OUTPUT SEQUENCES FOR                     │
│  MACHINE LEARNING TASK                    │
└─────────────────────────────────────────┘
                    │
                    ▼
┌─────────────────────────────────────────┐
│  DETERMINE ORDERINGS FOR GENERATING       │ ⟋ 604
│  EXAMPLE OUTPUT SEQUENCES                 │
└─────────────────────────────────────────┘
                    │
                    ▼
┌─────────────────────────────────────────┐
│  UPDATE GENERATIVE MODEL AND UNCERTAINTY  │
│  SCORING NEURAL NETWORK TO OPTIMIZE       │
│  OBJECTIVE FUNCTION THAT DEPENDS ON       │ ⟋ 606
│  LIKELIHOOD OF THE GENERATIVE MODEL AND   │
│  UNCERTAINTY SCORING NEURAL NETWORK       │
│  GENERATING THE EXAMPLE OUTPUT SEQUENCES  │
│  FOLLOWING THE DETERMINED ORDERINGS       │
└─────────────────────────────────────────┘
                    │
                    ▼
      NO    ╱──────────────────────╲
   ◄────────   TRAINING COMPLETE?     ⟋ 608
            ╲──────────────────────╱
                    │
                   YES
                    ▼
┌─────────────────────────────────────────┐
│  PROVIDE TRAINED GENERATIVE MODEL AND     │ ⟋ 610
│  UNCERTAINTY SCORING NEURAL NETWORK       │
└─────────────────────────────────────────┘
```

FIG. 6

700

| Method | | | ELBO | Validity % | Uniqueness % | FCD |
|---|---|---|---|---|---|---|
| Dataset | | | - | 99.3 | 100 | 0.005 |
| GDSS | | | - | 95.7 | 98.5 | 2.900 |
| DiGress | | | 69.6 | 99.00 | 96.20 | - |
| GraphARM | | | - | 90.25 | 95.62 | 1.22 |
| CatFlow | | | - | **99.81** | **99.95** | 0.441 |
| | $p_\theta$ | $q_\theta$ | | | | |
| Uniform-ARM | | | 24.5 | 98.90 | 99.11 | 0.671 |
| LO-ARM-ent-sep | entropy | separate | | 99.12 | 99.14 | 0.459 |
| LO-ARM-st-st | shared torso | shared torso | | 99.19 | 99.31 | 0.437 |
| LO-ARM-st-sep | shared torso | separate | 21.4 | **99.85** | 98.63 | **0.240** |

702

| Method | V.%↑ | U.%↑ | N.%↑ | FCD↓ |
|---|---|---|---|---|
| Random sampler | 100.0 | 99.7 | 0.0 | 92.9 |
| DeFoG (graph-based) | 99.0 | 99.0 | 97.9 | 73.8 |
| Cometh (graph-based) | 98.9 | 98.9 | 97.6 | 72.7 |
| AAE | 82.2 | 100.0 | **99.8** | 52.9 |
| VAE | 87.0 | 99.9 | 97.4 | 86.3 |
| LSTM AR (Brown et al., 2019) | 95.9 | 95.9 | 87.4 | **91.3** |
| Transfomer AR w/ RoPE (Wang et al., 2025a) | 96.9 | 100.0 | 100.0 | 90.7 |
| Transfomer AR w/o RoPE (Wang et al., 2025a) | 98.7 | 100.0 | 100.0 | 86.7 |
| AO-ARM | 63.3 | 99.8 | 99.4 | 72.1 |
| Standard LO-ARM | 92.6 | 100.0 | 95.3 | 79.4 |
| $\alpha$-$\beta$-LO-ARM | 94.4 | 100.0 | 93.0 | 90.9 |

FIG. 7

**Application Number**

EP 26 15 5562

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | WO 2019/081781 A1 (DEEPMIND TECH LTD [GB]) 2 May 2019 (2019-05-02) * page 1 - page 18; figures 1-6 * | 1-15 | INV. G06N3/045 G06N3/047 G06N7/01 |
| A | JIATAO GU ET AL: "Insertion-based Decoding with automatically Inferred Generation Order", ARXIV.ORG CORNELL UNIVERSITY LIBRARY, 201 OLIN LIBRARY CORNELL UNIVERSITY ITHACA, NY 14853, 4 February 2019 (2019-02-04), XP081510296, * Abstract and Section 1 * | 1-15 | |

**TECHNICAL FIELDS SEARCHED (IPC)**

G06N

The present search report has been drawn up for all claims

| Place of search | Date of completion of the search | Examiner |
|---|---|---|
| The Hague | 22 April 2026 | Nourestani, S |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 26 15 5562

This annex lists the patent family members relating to the patent documents cited in the above-mentioned European search report.
The members are as contained in the European Patent Office EDP file on
The European Patent Office is in no way liable for these particulars which are merely given for the purpose of information.

22-04-2026

| Patent document cited in search report | Publication date | Patent family member(s) | | Publication date |
|---|---|---|---|---|
| WO 2019081781 A1 | 02-05-2019 | CN | 111465944 A | 28-07-2020 |
| | | EP | 3698288 A1 | 26-08-2020 |
| | | US | 2020279151 A1 | 03-09-2020 |
| | | US | 2024054328 A1 | 15-02-2024 |
| | | WO | 2019081781 A1 | 02-05-2019 |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Non-patent literature cited in the description

- Insertion Transformer: Flexible Sequence Generation via Insertion Operations. **STERN et al.** International Conference on Machine Learning. 2019
- **GU et al.** Insertion-Based Decoding with Automatically Inferred Generation Order. *Transactions of the Association for Computational Linguistics*, 2019, vol. 7, 661-676
- **DRIESS et al.** *arXiv:2403.03378*
- **BROHAN et al.** *arXiv:2212.06817*
- **BROHAN et al.** *arXiv:2407.15818*
- **BROWN et al.** GuacaMol: Benchmarking Models for de Novo Molecular Design.. *Journal of Chemical Information and Modeling*, vol. 59 (3), 1096-1108
- **KOOL**. Stochastic Beams and Where to Find Them: The Gumbel-Top-k Trick for Sampling Sequences Without Replacement. *International Conference on Machine Learning*, 2019
- **RAMAKRISHNAN et al.** Quantum chemistry structures and properties of 134 kilo molecules. *Scientific Data*, 2014, vol. 1 (1), 1-7
- **VIGNAC et al.** Digress: Discrete denoising diffusion for graph generation.. *arXiv preprint arXiv:2209.14734*, 2022
- **BROWN et al.** GuacaMol: benchmarking models for de novo molecular design.. *Journal of chemical information and modeling*, 2019, vol. 59 (3), 1096-1108